# EUROPÄISCHE PATENTANMELDUNG

(11) **EP 4 108 741 A1**
(43) Veröffentlichungstag der Anmeldung: **28.12.2022**
(21) Anmeldenummer: 22168836.9
(22) Anmeldetag: 21.11.2014
(51) Int. Cl.: C10J 3/62, H02J 3/04

(54) **KOMBINIERTES ENERGIENETZWERK**

(30) Priorität: 21.11.2013 EP 13193803
(62) Teilanmeldung aus: 14805525.4
(71) Anmelder: RV Lizenz AG, 6330 Cham (CH)
(72) Erfinder: RÜDLINGER, Mikael, 6330 Cham (CH)
(74) Vertreter: IPrime Rentsch Kaelin AG

(57) **Zusammenfassung**

Eine Energiemanagementeinheit (10) zur Versorgung eines lokalen Energieversorgungsnetzwerks (29) umfasst Vorrichtungen zur Entnahme von elektrischem Strom (46) aus einem übergeordneten Stromnetz (4, 36), zu dessen Umwandlung in elektrischen Strom (47) niedrigerer Spannung, und zur Einspeisung dieses elektrischen Stroms in ein lokales Stromnetz (90). Die Energiemanagementeinheit weist weiter Vorrichtungen auf zur Entnahme von fluiden Betriebsstoffen (56) aus einem Transportsystem (6, 60) für fluide Betriebsstoffe, zur Erzeugung von elektrischem Strom (47) aus den genannten fluiden Betriebsstoffen (56), und zur Einspeisung des genannten elektrischen Stroms in das lokale Stromnetz. Eine Steuerungsanlage (70) ist dazu eingerichtet, über ein Kommunikationsnetzwerk (16) mit einer Steuerungseinheit (9) des Energieversorgungssystems (2) zu kommunizieren und die Bezugsraten von elektrischem Strom (46) aus dem übergeordneten Stromnetz (4, 36) und von fluiden Betriebsstoffen (56) aus dem Betriebsstoff-Transportsystem (6, 60) so zu steuern, dass eine zeitlich möglichst gleichmässige Belastung der entsprechenden Versorgungsnetze (36, 60) und/oder eine möglichst kleine Dimensionierung des zweiten Energieversorgungsnetzwerk (6, 60) in Bezug auf den Leitungsquerschnitt und/oder den Betriebsdruck erzielt wird.

## Beschreibung

### Gebiet der Technik

Die Erfindung betrifft Energieversorgungssysteme, Energiemanagementeinheiten, und Verfahren zur Energieversorgung von lokalen und regionalen Energiesystemen und Energieverbrauchern, gemäss dem Oberbegriff der unabhängigen Patentansprüche.

### Hintergrund der Technik

Bekannte Energieversorgungssysteme beruhen darauf, dass zentrale Energieerzeugungseinheiten Energie in einer bestimmten Form bereitstellen, beispielsweise als elektrische Energie, als Wärmeenergie in Form von Heisswasser oder Heissdampf (Fernwärme), oder als chemische Energie in Form von Erdgas, und diese über geeignete Versorgungsnetzwerke zu einer Vielzahl von Energieverbraucher-Einheiten liefern.

Bei der Energieversorgung einer Vielzahl von räumlich verteilten Energieverbrauchereinheiten, beispielsweise der Versorgung von Haushalten mit elektrischem Strom, ist die ausreichende Dimensionierung und Gestaltung des entsprechenden Versorgungsnetzwerkes ein grundlegender Faktor, um eine ausreichende Versorgungsleistung und Versorgungssicherheit sicherzustellen.

Versorgungsnetzwerke umfassen oft verschiedene Hierarchiestufen. Mehrere lokale oder regionale Verbrauchereinheiten können zu einem lokalen Netzwerk zusammengefasst sein, die wiederum über ein übergeordnetes Netzwerk verbunden sein können. Im Falle eines Stromnetzwerks beispielsweise sind eine Vielzahl kleiner Verbrauchereinheiten, beispielsweise verschiedenen Haushalte an einem gemeinsamen, lokalen Niederspannungsnetz angeschlossen. Verschiedene Niederspannungsnetzwerke wiederum sind über Transformatoren an einem Mittelspannungsnetzwerk angeschlossen, das dem regionalen Energietransport dient. Ein Hochspannungsverteilnetz dient dem Transport der elektrischen Energie von Gross-Kraftwerken über grössere Distanzen zu den Mittelspannungsnetzwerken. Kleinere Kraftwerke können die Energie auch in das Mittelspannungsnetzwerk einspeisen, und lokale Energieerzeuger wie beispielsweise Photovoltaik-Anlagen oder Windkraftwerke, ins Niederspannungsnetzwerk.

Ein anderes Beispiel eines Versorgungsnetzwerkes sind Fernwärmesysteme, bei denen Wärmeenergie in Form von Wasserdampf oder Heisswasser (beispielsweise 120 °C, 16 bar) erzeugt und über einen Primärkreislauf zu den verschiedenen Verbrauchereinheiten transportiert wird, wo sie der Gebäudeheizung und Warmwasserproduktion dient. Bei üblichen Fernwärmesystemen wird die Wärmeenergie zentral in einem Blockheizkraftwerk hergestellt, beispielsweise in einer Holzschnitzelheizung oder einer Müllverbrennungsanlage. Die Energieverbraucher sind über geeignete Wärmetauscher direkt, oder indirekt über einen lokalen Sekundärkreislauf, an den Primärkreislauf des Fernwärmesystems angebunden. Analog zu Fernwärmenetzen existieren auch Fernkältenetze, wobei auch hier im Grund genommen Wärmenergie transportiert wird.

Bei der Energieversorgung über ein räumlich verteiltes Versorgungsnetzwerk, das durch einen oder mehrere Energieerzeuger gespeist wird, ergibt sich die notwendige Kapazität sowohl des Versorgungsnetzwerkes als auch der Energieerzeuger aus dem maximal benötigten Spitzen-Energiebedarf der Energieverbraucher. Dieser Energiebedarf ist in der Regel erheblichen zeitlichen Schwankungen unterworfen. Bei einem Fernwärmenetz zum Beispiel treten Verbrauchsspitzen am frühen Morgen und am frühen Abend auf, beim Stromnetz, zum Beispiel treten Verbrauchsspitzen am Morgen, am Mittag und am Abend auf.

Als Folge des zeitlich schwankenden Energiebedarfs muss ein räumlich verteiltes Versorgungsnetzwerk für ein Vielfaches des durchschnittlichen Energie-Durchsatzes ausgelegt werden. Bei Fernwärmesystemen beispielsweise müssen die Leitungen auf die zu erwartende maximale tägliche Verbrauchsspitze am kältesten Tag des Winters ausgerichtet werden. Eine zu schwache Auslegung eines Versorgungsnetzwerkes kann zu einer unzureichenden Energieversorgung aufgrund eines Kapazitätsengpasses führen.

Im Falle des Stromnetzes kann eine Überlastung gar zu einem Zusammenbruch des Netzes führen. Ausschlaggebend sind dabei die an den Knotenstellen des Netzes angebrachten Sicherungen, welche beispielsweise eine Obergrenze von 1000 A aufweisen. Bei einem auf 50 kV ausgelegten Netz führt das zu einer max. Leistung von maximal 50 MW, und bei einem auf 25 kV ausgelegten Netz von 25 MW. Da die Investitionskosten für Versorgungsnetzwerke aufgrund aufwendigerer Technologie überproportional zu deren Kapazität ansteigen, können tiefere Verbrauchsspitzen zu erheblichen Kosteneinsparungen beim Netzbau und Netzbetrieb führen

Analog zum Versorgungsnetzwerk müssen auch die Energieerzeuger in der Lage sein, die Verbrauchsspitzen abzudecken. Im Falle von Stromkraftwerken werden zu diesem Zweck träge Kraftwerke für die Grundlast-Produktion (Kernkraftwerke, Kohlekraftwerke, Flusswasserkraftwerke, Windkraftwerke, etc.) und schnell anlaufende Kraftwerke für die Spitzenlast-Produktion (Speicherwasserkraftwerke, Gaskraftwerke, etc.) kombiniert. Die notwendigen Überkapazitäten führen ebenfalls zu höheren Investitionskosten.

Aufgrund der wachsenden Anzahl an regionalen oder lokalen Stromnetz angeschlossenen Klein-Kraftwerken, beispielsweise photovoltaische Anlagen und Windkraftwerke, ergeben sich für den Netzbetreiber schwierig vorausplanbare Produktionsschwankungen. Da die Netzbetreiber teilweise aus gesetzlichen Gründen zur Einspeisung der lokal produzierten Energie in das Netz verpflichtet sind, ist die Produktion zudem teilweise gar nicht kontrollierbar. Diese zusätzlichen Energieproduktionsspitzen müssen bei der Auslegung der Netze ebenfalls berücksichtigt werden, und reduzieren die durchschnittlich nutzbare Kapazität weiter.

Es sind verschiedene Ansätze bekannt, um eine gleichmässigere Belastung von Energieversorgungsnetzwerken zu erreichen, und damit eine geringere notwendige Kapazität von Netzwerk und Energieerzeugern zu erreichen, bzw. aufgrund der damit einhergehenden geringeren Verluste eine verbesserte Energieeffizienz.

Im Falle des Stromversorgung wird mit sog. Smart Grids bzw. intelligenten Stromnetzen versucht, durch Abstimmen der verschiedenen flexiblen und nicht flexiblen Energieerzeugeranlagen, Energiespeicheranlagen (Pumpspeicherkraftwerke) und Energieverbraucheranlagen einen räumlich und zeitlich möglichst homogene Belastung des Netzwerks zu erreichen. Zu diesem Zweck kommunizieren die verschiedenen Bestandteile des Smart Grids untereinander. Dies hat insofern Grenzen, als dass der lokale Verbrauch und die lokale Produktion von elektrischer Energie nur beschränkt von aussen kontrollieren lassen.

Bei Fernwärmesystemen können durch Verwendung von geeigneten Wärmeenergiespeichern in Form von Heisswassertanks oder Latentwärmespeichern (beispielsweise gezeigt in DE 2730406 C2) Schwankungen des Energiebedarfs im Tagesverlauf ausgeglichen werden. Es ist bekannt, beispielsweise aus DE 2730406 C2, durch Verwendung von geeigneten Wärmespeichern, beispielsweise Heisswassertanks oder Latentwärmespeichern, den Energiebedarf während eines Tages auszugleichen. Durch geeignete Kopplung von Warmwasserspeichern, Heizungssystemen, und Warmwasserbereitung kann die Effizienz der Wärmenutzung verbessert werden, wie beispielsweise in DE 10311091 B4 und DE 3123875 C2 beschrieben.

A. Kwasinski diskutiert im Artikel *"*Technology Planning for Electric Power Supply in Critical Events Considering a Bulk Grid, Backup Power Plants, and Micro Grids", IEEE Systems Journal 4(2), p. 167, 3. Juni 2010, die Risikobeurteilung von Energieversorgungssystemen bei Naturkatastrophen, am Beispiel von drei technologischen Optionen für die Stromversorgungen von lokalen Netzwerken, nämlich dem Anschluss an ein externes Versorgungsnetzwerk mittels Umspannwerk; einem Backup-Dieselkraftwerk an der Schnittstelle zwischen lokalem Netzwerk und externem Netzwerk; und einem Microgrid mit eigener Energieproduktion, beispielsweise gasturbinen-betriebenen Stromgeneratoren.

M. Shahidehpour et al. beschreiben in ihrem Artikel "Cutting Campus Energy Costs with Hierarchical Control", IEEE Electrification Magazine Sept. 2013, p. 40, 23. September 2013, ein Microgrid des Illinois Institute of Technology, bei welchem Stromgeneratoren mittels Gasturbinen betrieben werden, um Stromausfälle des externen Zufuhrnetzes auszugleichen. Akkumulatoren dienen der Überbrückung kurzfristiger Stromausfälle ohne den Einsatz der Generatoren. Weitere Aspekte sind die Steuerung des Systems mit Blick auf die Kosten der bezogenen Energie, der Aufbau des internen Stromnetzes mit mehreren getrennten Stromkreisen, um interne Stromausfälle auf ein Minimum an Gebäuden zu reduzieren, sowie die Integration von erneuerbaren Energiequellen (Photovoltaik, Windkraft) in das lokale Netz.

Es besteht allgemein Bedarf nach möglichst effizienten Energieversorgungsnetzwerken, die zudem vorzugsweise möglichst geringe Neuinvestitionen notwendig machen.

### Aufgabe der Erfindung

Eine Aufgabe der Erfindung ist es, ein Energieversorgungssystem der eingangs erwähnten Art zur Verfügung zu stellen, das die oben erwähnten und andere Nachteile nicht aufweist. Insbesondere soll ein solches Energieversorgungssystem die effiziente Verteilung von Energie ermöglichen. Die Kapazitäten des zur Verteilung notwendigen Netzwerks sollen möglichst klein ausgelegt werden können. Weiter soll ein solches System robust und stabil sein, und unempfindlich gegenüber Leistungsspitzen. Eine andere Aufgabe der Erfindung ist es, ein Energieversorgungssystem bereitzustellen, welches es ermöglicht, erneuerbare Energiequellen wie beispielsweise Windenergie und Sonnenenergie, deren Produktionsleistung nur sehr beschränkt gesteuert werden kann und primär durch meteorologische Parameter bedingt, effizient zu nutzen.

Diese und andere Aufgaben werden gelöst durch ein erfindungsgemässgemässes Energieversorgungssystem, eine erfindungsgemässe Energiemanagementeinheit, und ein erfindungsgemässes Verfahren, gemäss den unabhängigen Ansprüchen. Weitere bevorzugte Ausführungsformen sind in den abhängigen Ansprüchen gegeben.

### Darstellung der Erfindung

Ein erster Aspekt der Erfindung betrifft ein vorteilhaftes Energieversorgungssystem. Ein solches erfindungsgemässes Energieversorgungssystem umfasst ein erstes Energieversorgungsnetzwerk in Form eines Stromnetzes zum Transport von elektrischer Energie und ein zweites Energieversorgungsnetzwerk mit einem Transportsystem für fluide Betriebsstoffe. Das Energieversorgungssystem weist mindestens eine Energieerzeugungseinheit auf, mit der mit Wasserstoffgas und kohlenstoffhaltigem Material die fluiden Betriebstoffe erzeugbar und ins zweite Energieversorgungsnetzwerk einspeisbar sind, und mindestens eine lokale Energiemanagementeinheit, mit der aus dem zweiten Energieversorgungsnetzwerk entnommene fluide Betriebstoffe in elektrische Energie umwandelbar und in ein lokales Stromnetz einspeisbar sind. Vorteilhaft weist das zweite Energieversorgungsnetzwerk ein Transportsystem auf für den Rücktransport von kohlendioxidhaltigen Restgasen, die bei der energetischen Verwertung der fluiden Betriebstoffe bei einem oder mehreren Energieverbrauchern und/oder Energiemanagementeinheiten anfallen.

Eine vorteilhafte Ausführungsform eines erfindungsgemässen Energieversorgungssystems umfasst ein erstes Energieversorgungsnetzwerk in Form eines Stromnetzes zum Transport von elektrischer Energie; ein zweites Energieversorgungsnetzwerk mit einem Transportsystem für fluide Betriebsstoffe; ein Transportsystem für den Rücktransport von kohlendioxidhaltigen Restgasen, die bei der energetischen Verwertung der fluiden Betriebstoffe bei einem oder mehreren Energieverbrauchern anfallen; und mindestens eine Energieerzeugungseinheit, mit der aus kohlenstoffhaltigem Material die fluiden Betriebstoffe herstellbar und ins zweite Energieversorgungsnetzwerk einspeisbar sind. Das Energieversorgungssystem umfasst weiter mindestens eine lokale Energiemanagementeinheit zur Versorgung eines lokalen Energieversorgungsnetzwerks, mit der aus dem zweiten Energieversorgungsnetzwerk entnommene fluide Betriebstoffe in elektrische Energie umwandelbar und in ein lokales Stromnetz einspeisbar sind. Die mindestens eine Energiemanagementeinheit umfasst dabei Vorrichtungen zur Entnahme von elektrischem Strom aus dem übergeordneten Stromnetz des Energieversorgungssystems, zu dessen Umwandlung in elektrischen Strom niedrigerer Spannung, und zur Einspeisung dieses elektrischen Stroms niedrigerer Spannung in ein Stromnetz des lokalen Energieversorgungsnetzwerks; sowie Vorrichtungen zur Entnahme der fluiden Betriebstoffe aus dem Transportsystem für fluide Betriebsstoffe des Energieversorgungssystems, zur Erzeugung von elektrischem Strom aus den genannten fluiden Betriebstoffen, und zur Einspeisung des genannten elektrischen Stroms in das genannte Stromnetz des lokalen Energieversorgungsnetzwerks; und Vorrichtungen zum Auffangen von während der energetischen Verwertung der fluiden Betriebstoffe in der Energiemanagementeinheit anfallenden Restgasen und zur Rückführung dieser Restgase in das Restgas-Transportsystem des Energieversorgungssystems. Das Energieversorgungssystem umfasst weiter eine Steuerungseinheit des Energieversorgungssystems, welche über ein Kommunikationsnetzwerk mit der mindestens einen Energieerzeugungseinheit und der mindestens einen Energiemanagementeinheit oder einem anderen Energieverbraucher des Energieversorgungssystems kommunizieren kann, und dafür eingerichtet ist, den Betrieb der verschiedenen Einheiten zu steuern. Eine Steuerungsanlage der mindestens einen Energiemanagementeinheit ist dazu eingerichtet ist, über das Kommunikationsnetzwerk mit der Steuerungseinheit des Energieversorgungssystems zu kommunizieren.

In einer vorteilhaften Ausführungsform eines solchen erfindungsgemässen Energieversorgungssystems ist die Steuerungseinheit des Energieversorgungssystems dazu eingerichtet, die Bezugsraten von elektrischem Strom aus dem übergeordneten Stromnetz und von fluiden Betriebsstoffen aus dem Betriebstoff-Transportsystem so zu steuern, dass eine möglichst kleine Dimensionierung des zweiten Energieversorgungsnetzwerk in Bezug auf den Leitungsquerschnitt und/oder den Betriebsdruck erzielt wird.

Alternativ oder zusätzlich ist die Steuerungseinheit des Energieversorgungssystems dazu eingerichtet, die Bezugsraten von elektrischem Strom aus dem übergeordneten Stromnetz und von fluiden Betriebsstoffen aus dem Betriebstoff-Transportsystem so zu steuern, dass eine zeitlich möglichst gleichmässige Belastung der entsprechenden Versorgungsnetze erzielt wird.

In einer weiteren vorteilhaften Ausführungsform der diskutierten erfindungsgemässen Energieversorgungssysteme ist die mindestens eine Energieerzeugungseinheit dafür eingerichtet, Restgas aus dem Restgas-Transportsystem zu entnehmen und dessen kohlenstoffhaltige Anteile zur Herstellung der fluiden Betriebstoffe zu verwenden.

Da Restgas im wesentlichen aus Kohlendioxid besteht, ist zur Ausgleichung der Massenbilanz eine Wasserstoffatom-Quelle notwendig. Je mehr Kohlendioxid wieder in die Produktion von Betriebstoff geht, umso mehr Wasserstoff muss dem System zugeführt werden. Wasserstoffatome können beispielsweise in Form von elektrolytisch hergestelltem Wasserstoffgas bereitgestellt werden, oder in Form von Naturgas mit hohem Wasserstoffgasanteil.

Ein solches erfindungsgemässes Energieversorgungssystem erlaubt eine wesentlich effizientere Auslegung der Energieversorgungsnetzwerke, indem es zwei verschiedenartige Energieträger mit komplementären Eigenschaften in einem Gesamtsystem kombiniert, nämlich elektrische Energie auf der einen Seite, und auf der anderen Seite chemische Energie in Form von fluiden Betriebsstoffen. Elektrische Energie kann sehr schnell über weite Distanzen transportiert werden ist, ist jedoch nur mit grossem Aufwand speicherbar. Fluide Betriebsstoffe wiederum sind beliebig lange lagerbar, also speicherbar. Jedoch ist aufgrund ihrer Masse der Transport aufwendiger und langsamer.

Vorteilhaft werden fluide Betriebstoffe verwendet, die eine möglichst hohe Energiedichte pro Volumen aufweisen, wobei bei gasförmigen, also kompressiblen Betriebsstoffen natürlich die Dichte in einem gewissen Mass steuerbar ist. Die folgende Tabelle 1 führt die Energiedichten einiger fluider Betriebsstoffe auf:

**Tabelle 1**

| Fluider Betriebstoff | Energiedichte [MJ/kg] | Dichte^{∗} [kg/m³] | Energiedichte [MJ/m³] |
|---|---|---|---|
| Methanol | 19.7 | 792 | 15840 |
| Erdgas H | 50 | 0.8 | 40 |
| Erdgas L | 36 | 0.8 | 29 |
| Wasserstoff | 142 | 0.09 | 13 |
| Diesel^{∗∗} | 45.5 | 820 | 37310 |
| Benzin^{∗∗} | 43 | 720 | 30240 |

| | | | |
|---|---|---|---|
| ^{∗}Dichte bei Normaldruck; ^{∗∗} als Beispiel von Kohlenwasserstoffgemischen | | | |

Diesel-analoge Kohlenwasserstoff-Gemische sind als fluider Betriebsstoff also beispielsweise besonders gut geeignet, weil sie zum einen eine hohe Energiedichte aufweisen, und zum anderen für den Transport geringere Anforderungen stellen als unter hohem Druck stehendes Erdgas.

Als Transportsystem für fluide Betriebsstoffe kann beispielsweise ein Leitungssystem eingesetzt werden, in dem der fluide Betriebsstoff durch Pumpen in kontinuierlicher Weise gefördert werden kann. Ebenfalls ein mögliches Transportsystem ist der Transport in einzelnen Chargen, beispielsweise per Tanklastwagen, oder eine Kombination solcher Systeme. Ein leitungsbasiertes Transportsystem ist vorteilhaft für Energieversorgungssysteme mit vergleichsweise kleinräumiger Verteilung, während der Transport per Lastwagen für grössere Distanzen günstiger sein kann, und flexible Anpassungen des Energieversorgungssystems erlaubt.

Weiter umfasst ein erfindungsgemässes Energieversorgungssystems vorteilhaft eine Anlage zur elektrolytischen Herstellung von Wasserstoffgas zur Verwendung in der Herstellung der fluiden Betriebstoffe. Besonders vorteilhaft weist jede Energieerzeugungseinheit eine solche Anlage auf.

Die Verwendung von elektrischer Energie zur Herstellung des Wasserstoffgases erlaubt es, unregelmässig oder nur temporär anfallende elektrische Energie beispielsweise aus weit entfernten Windkraftwerken oder aus photovoltaischen oder solarthermischen Kraftwerken flexibel dann zu nutzen, wenn die elektrische Energie auch anfällt, und sie in chemischer Form entweder als verdichtetes Wasserstoffgas zur späteren Verwendung zu speichern, oder in Form der aus dem Wasserstoffgas und kohlenstoffhaltigem Ausgangsmaterial hergestellten fluiden Betriebstoffe.

Aus der WO 2011/061299 A1 der Anmelderin ist ein Verfahren bekannt, in welcher kohlenstoffhaltige Ausgangsstoffe und gegebenenfalls Wasserstoff mit einem thermisch-chemischen Verfahren in einem geschlossenen Kreislauf in kohlenstoffhaltige Betriebsstoffe umgewandelt werden. In dem Verfahren anfallende Wärmeenergie kann zur Erzeugung von Grundlast-Strom eingesetzt werden. Aus den erzeugten Betriebsstoffen wiederum kann flexibel Spitzenlast-Strom erzeugt werden. Aus der WO 2011/089200 A2 der Anmelderin ist ein Versorgungssystem mit zwei getrennten Leitungskreisen bekannt. Mit einem ersten Leitungskreis werden verschiedene Energieverbraucher mit fluiden Betriebstoffen versorgt, die beispielsweise mit einer Anlage aus WO 2011/061 299 A1 erzeugt worden sind. Bei der Energieverwertung anfallendes im wesentlichen aus Kohlendioxid bestehendes Restgas wird über einen zweiten Leitungskreis zur Anlage zurückgeführt, um den Kreislauf des Kohlendioxids wieder zu schliessen. Der Offenbarungsgehalt von WO 2011/061299 A1 und WO 2011/089200 A2 gilt hiermit seiner Gesamtheit durch Referenz als Teil dieser Beschreibung.

In einer anderen vorteilhaften Ausführungsvariante eines erfindungsgemässen Energieversorgungssystems weist die mindestens eine Energieerzeugungseinheit eine Verwertungsanlage auf, mit einer ersten Untereinheit zur Durchführung einer Pyrolyse von kohlenstoffhaltigem Material zu Pyrolysekoks und Pyrolysegas; einer zweiten Untereinheit zur Durchführung einer Vergasung des Pyrolysekokses zu Synthesegas und Reststoffen; und einer dritten Untereinheit zur Durchführung einer Umwandlung des Synthesegases in fluide Betriebsstoffe, wobei Rücklaufgas übrig bleibt. Alle drei Untereinheiten sind druckfest geschlossen und bilden einen geschlossenen Kreislauf. Eine Transportleitung für das Pyrolysegas verbindet die erste Untereinheit druckfest mit der zweiten Untereinheit und/oder mit der dritten Untereinheit. Eine Transportleitung für das Synthesegas verbindet die zweite Untereinheit druckfest mit der dritten Untereinheit und/oder mit der ersten Untereinheit. Eine Transportleitung für das Rücklaufgas verbindet die dritte Untereinheit druckfest mit der ersten Untereinheit und/oder mit der zweiten Untereinheit verbindet. Das Wasserstoffgas wird in mindestens eine der drei Untereinheiten eingespeist. Besonders vorteilhaft umfasst die dritte Untereinheit eine Fischer-Tropsch-Synthese-Stufe und/oder einer Liquid-Phase-Methanol-Synthese-Stufe.

Die Verwertungsanlage ist weiter vorteilhaft dazu eingerichtet, Restgas aus dem zweiten Energieversorgungsnetzwerk in mindestens eine der drei Untereinheiten einzuspeisen.

In einem erfindungsgemässen Energieversorgungssystem kann zudem die mindestens eine Energieerzeugungseinheit eine Anlage zur Herstellung von elektrischem Strom umfassen. Diese Anlage kann eine mit Prozessdampf betriebene Dampfturbine aufweisen, und/oder eine mit fluiden Betriebstoffen betriebene Gasturbine oder kombinierte Gas-Dampfturbine.

Vorteilhaft ist in einer solchen Variante eines erfindungsgemässen Energieversorgungssystem die mindestens eine Energieerzeugungseinheit dafür vorgesehen, den hergestellten elektrischen Strom in das erste Energieversorgungsnetzwerk einzuspeisen.

Eine besonders vorteilhaften Ausführungsvariante eines erfindungsgemässen Energieversorgungssystem umfasst eine Steuerungseinheit, welche über ein Kommunikationsnetzwerk mit der mindestens einen Energieerzeugungseinheit und der mindestens einen Energiemanagementeinheit oder einem Energieverbraucher des Energieversorgungssystems kommunizieren kann, und die dafür eingerichtet ist, den Betrieb der verschiedenen Einheiten zu steuern.

Die Steuerungseinheit kann weiter dazu eingerichtet sein, über ein Kommunikationsnetzwerk mit Steuerungseinheiten anderer Energieversorgungssysteme und/oder mit externen Kraftwerken und/oder mit Steuerungssystemen vom Stromnetzwerken höherer Hierarchiestufen zu kommunizieren.

Ein erfindungsgemässes Energieversorgungssystem, wie es obenstehend beschrieben wird, weist vorteilhaft mindestens eine Energiemanagementeinheit zur Versorgung eines lokalen Energieversorgungsnetzwerks. Diese Energiemanagementeinheit umfasst Vorrichtungen zur Entnahme von elektrischem Strom aus dem übergeordneten Stromnetz des Energieversorgungssystems, zu dessen Umwandlung in elektrischen Strom niedrigerer Spannung, und zur Einspeisung dieses elektrischen Stroms niedrigerer Spannung in ein Stromnetz des lokalen Energieversorgungsnetzwerks; sowie Vorrichtungen zur Entnahme der fluiden Betriebstoffen aus dem Transportsystem für fluide Betriebsstoffe des Energieversorgungssystems, zur Erzeugung von elektrischem Strom aus den genannten fluiden Betriebstoffen, und zur Einspeisung des genannten elektrischen Stroms in das genannte Stromnetz des lokalen Energieversorgungsnetzwerks. Weiter umfasst die Energiemanagementeinheit eine Steuerungsanlage, die dazu eingerichtet ist, über das Kommunikationsnetzwerk mit der Steuerungseinheit des Energieversorgungssystems zu kommunizieren.

Diese Steuerungsanlage der mindestens einen Energiemanagementeinheit ist vorteilhaft dazu eingerichtet, über ein Kommunikationsnetzwerk mit lokalen Energieverbrauchern und lokalen Energieerzeugern des lokalen Energieversorgungsnetzwerks zu kommunizieren.

Die mindestens eine Energiemanagementeinheit kann zudem Vorrichtungen aufweisen zum Auffangen von während der energetischen Verwertung der fluiden Betriebstoffe in der Energiemanagementeinheit anfallenden Restgasen und zur Rückführung dieser Restgase in das Restgas-Transportsystem des Energieversorgungssystems.

Die mindestens eine Energiemanagementeinheit einer erfindungsgemässen Energieversorgungseinrichtung weist in einer anderen vorteilhaften Variante Vorrichtungen zur Erhitzung von Wärmemedien und/oder Abkühlung von Kältemedien auf, wobei die dazu benötigte Energie aus dem Stromnetz des Energieversorgungssystems bezogen und/oder durch die energetische Verwertung der aus dem Betriebsstoff-Transportsystem des Energieversorgungssystems bezogenen fluiden Betriebstoffen erhalten wird, und Vorrichtungen zur Einspeisung der erhitzten Wärmemedien und/oder abgekühlten Kältemedien in entsprechende Wärmetransportsysteme bzw. Kältetransportsysteme des lokalen Energieversorgungsnetzwerks.

Unter dem Begriff "Wärmemedium" werden geeignete fluide Wärmeträger verstanden, insbesondere Wasser, aber beispielsweise auch Öl, Dampf oder Inertgas. Unter dem Begriff "Kältemedium" wiederum werden ebenfalls fluide Wärmeträger verstanden, insbesondere Wasser, aber auch Öl oder Inertgas.

Die Steuerungseinheit eines erfindungsgemässen Energieversorgungssystems ist besonders vorteilhaft dafür eingerichtet, die mindestens eine Energieerzeugungseinheit und die mindestens eine Energiemanagementeinheit so zu steuern und aufeinander abzustimmen, dass die maximalen Transportraten in den beiden Energieversorgungsnetzwerken geringer sind als ohne Steuerung.

Ein zweiter Aspekt der Erfindung betrifft eine vorteilhafte Energiemanagementeinheit zur Versorgung eines lokalen Energieversorgungsnetzwerks. Eine solche erfindungsgemässe Energiemanagementeinheit zur Versorgung eines lokalen Energieversorgungsnetzwerks umfasst Vorrichtungen zur Entnahme von elektrischem Strom aus einem übergeordneten Stromnetz eines Energieversorgungssystems, zu dessen Umwandlung in elektrischen Strom niedrigerer Spannung, und zur Einspeisung dieses elektrischen Stroms niedrigerer Spannung in ein Stromnetz des lokalen Energieversorgungsnetzwerks. Weiter umfasst sie Vorrichtungen zur Entnahme von fluiden Betriebstoffen aus einem Transportsystem für fluide Betriebsstoffe des Energieversorgungssystems, zur Erzeugung von elektrischem Strom aus den genannten fluiden Betriebstoffen, und zur Einspeisung des genannten elektrischen Stroms in das genannte Stromnetz des lokalen Energieversorgungsnetzwerks. Eine Steuerungsanlage der Energiemanagementeinheit ist dazu eingerichtet, über ein Kommunikationsnetzwerk mit einer Steuerungseinheit des Energieversorgungssystems zu kommunizieren.

Eine andere vorteilhafte Ausführungsform einer solchen erfindungsgemässen Energiemanagementeinheit zur Versorgung eines lokalen Energieversorgungsnetzwerks umfasst Vorrichtungen zur Entnahme von elektrischem Strom aus einem übergeordneten Stromnetz eines Energieversorgungssystems, zu dessen Umwandlung in elektrischen Strom niedrigerer Spannung, und zur Einspeisung dieses elektrischen Stroms niedrigerer Spannung in ein Stromnetz des lokalen Energieversorgungsnetzwerks. Weiter umfasst sie Vorrichtungen zur Entnahme von fluiden Betriebstoffen aus einem Transportsystem für fluide Betriebsstoffe des Energieversorgungssystems, zur Erzeugung von elektrischem Strom aus den genannten fluiden Betriebstoffen, und zur Einspeisung des genannten elektrischen Stroms in das genannte Stromnetz des lokalen Energieversorgungsnetzwerks. Eine Steuerungsanlage der Energiemanagementeinheit ist dazu eingerichtet, über ein Kommunikationsnetzwerk mit einer Steuerungseinheit des Energieversorgungssystems zu kommunizieren, und die Bezugsraten von elektrischem Strom aus dem übergeordneten Stromnetz und von fluiden Betriebsstoffen aus dem Betriebstoff-Transportsystem so zu steuern, dass eine zeitlich möglichst gleichmässige Belastung der entsprechenden Versorgungsnetze erzielt wird, und/oder eine möglichst kleine Dimensionierung des zweiten Energieversorgungsnetzwerk in Bezug auf den Leitungsquerschnitt und/oder den Betriebsdruck erzielt wird.

Besonders vorteilhaft ist die Steuerungsanlage dazu eingerichtet, über ein Kommunikationsnetzwerk mit lokalen Energieverbrauchern und lokalen Energieerzeugern des lokalen Energieversorgungsnetzwerks zu kommunizieren.

Die Steuerungsanlage ist besonders vorteilhaft dazu eingerichtet, die Energiemanagementeinheit so zu steuern, dass sie im wesentlichen nur die Grundlast des Strombedarfs des lokalen Energieversorgungsnetzwerks aus dem übergeordneten Stromnetz bezieht, während die Spitzenlast des Strombedarfs des lokalen Energieversorgungsnetzwerks durch die energetische Verwertung von fluiden Betriebsstoffen gedeckt wird.

Die Steuerungsanlage kann zudem dazu eingerichtet sein, die Energiemanagementeinheit so zu steuern, dass die Bezugsrate von fluiden Betriebsstoffen aus dem Betriebstoff-Transportsystem im wesentlichen zeitlich konstant ist.

In einer andere vorteilhaften Ausführungsvariante einer erfindungsgemässen Energiemanagementeinheit sind Vorrichtungen vorgesehen zum Auffangen von während der energetischen Verwertung der fluiden Betriebstoffe in der Energiemanagementeinheit anfallenden Restgasen und zur Rückführung dieser Restgase in ein Restgas-Transportsystem des Energieversorgungssystems.

In noch einer weiteren vorteilhaften Variante umfasst die erfindungsgemässe Energiemanagementeinheit Vorrichtungen zur Erhitzung von Wärmemedien und/oder Abkühlung von Kältemedien, wobei die dazu benötigte Energie aus dem Stromnetz des Energieversorgungssystems bezogen wird und/oder durch die energetische Verwertung der aus dem Transportsystem des Energieversorgungssystems bezogenen fluiden Betriebstoffen erhalten wird. Weiter sind Vorrichtung vorgesehen zur Einspeisung der erhitzten Wärmemedien und/oder abgekühlten Kältemedien in entsprechende Wärmetransportsysteme bzw. Kältetransportsysteme des lokalen Energieversorgungsnetzwerks.

Eine weitere vorteilhafte Energiemanagementeinheit zur Versorgung eines lokalen Energieversorgungsnetzwerks umfasst Vorrichtungen zur Entnahme von elektrischem Strom aus einem übergeordneten Stromnetz eines Energieversorgungssystems, zu dessen Umwandlung in elektrischen Strom niedrigerer Spannung, und zur Einspeisung dieses elektrischen Stroms niedrigerer Spannung in ein Stromnetz des lokalen Energieversorgungsnetzwerks; und Vorrichtungen zur Entnahme von fluiden Betriebstoffen aus einem Transportsystem für fluide Betriebsstoffe des Energieversorgungssystems, zur Erzeugung von elektrischem Strom aus den genannten fluiden Betriebstoffen, und zur Einspeisung des genannten elektrischen Stroms in das genannte Stromnetz des lokalen Energieversorgungsnetzwerks. Eine Steuerungsanlage ist dazu eingerichtet, über ein Kommunikationsnetzwerk mit einer Steuerungseinheit des Energieversorgungssystems zu kommunizieren. Die Energiemanagementeinheit umfasst weiter Vorrichtungen zum Auffangen von während der energetischen Verwertung der fluiden Betriebstoffe in der Energiemanagementeinheit anfallenden Restgasen und zur Rückführung dieser Restgase in ein Restgas-Transportsystem des Energieversorgungssystems.

Besonders vorteilhaft ist bei einer solchen Energiemanagementeinheit die Steuerungsanlage dazu eingerichtet, aus einem als gemeinsame Leitungssystem ausgelegtem Transportsystem für fluide Betriebsstoffe und Restgase des Energieversorgungssystems wechselweise fluide Betriebstoffe zu entnehmen, und Restgase in dieses gemeinsame Leitungssystem einzuspeisen.

Ein dritter Aspekt der Erfindung betrifft ein vorteilhaftes Verfahren zur Versorgung von einem oder mehreren lokalen Energieversorgungssystemen mit elektrischer Energie. In einem erfindungsgemässen Verfahren zur Versorgung von einem oder mehreren lokalen Energieversorgungssystemen mit elektrischer Energie wird elektrische Energie aus einem übergeordneten Stromnetz bezogen und in ein erstes Energieversorgungsnetzwerk eingespeist; mit mindestens einer Energieerzeugungseinheit fluide Betriebstoffe hergestellt, gegebenenfalls zwischengespeichert und in ein zweites Energieversorgungsnetzwerk eingespeist, wobei die zur Herstellung der fluiden Betriebstoffe notwendige Energie aus dem übergeordneten Stromnetz und optional zusätzlich aus energiehaltigen kohlenstoffhaltigen Ausgangsmaterialien bezogen wird; mit mindestens einer Energiemanagementeinheit elektrische Energie aus dem ersten Energieversorgungsnetzwerk bezogen und in das lokale Stromnetz eingespeist; mit der mindestens einen Energiemanagementeinheit Energie in Form von fluiden Betriebstoffen aus dem zweiten Energieversorgungsnetzwerk bezogen und gegebenenfalls zwischengespeichert, und durch energetische Verwertung der fluiden Betriebstoffe elektrische Energie für das lokale Energieversorgungssystem hergestellt und in das lokale Stromnetz eingespeist; und die Herstellung von fluiden Betriebstoffen durch die mindestens eine Energieerzeugungseinheit sowie der Bezug der beiden verschiedenen Energieformen in Form von elektrischer Energie und fluiden Betriebstoffen durch die mindestens eine Energiemanagementeinheit so gesteuert und aufeinander abgestimmt wird, dass, dass die maximalen Transportraten in den beiden Energieversorgungsnetzwerken geringer sind als ohne Steuerung.

In noch einer Ausführungsvariante einer erfindungsgemässen Energiemanagementeinheit ist diese dazu eingerichtet, mit anderen erfindungsgemässen Energiemanagementeinheiten über das erste Energieversorgungsnetzwerk und/oder das zweite Energieversorgungsnetzwerk Energieträger auszutauschen, wobei die beteiligten Energiemanagementeinheit dazu miteinander kommunizieren.

So können beispielsweise zwei über die Energieversorgungsnetzwerke verbundene erfindungsgemässe Energiemanagementeinheiten vereinbaren, elektrische Energie auszutauschen, indem eine erste Energiemanagementeinheit aus fluiden Betriebsstoffen, die Sie aus dem zweiten Energieversorgungsnetzwerk oder ihren Zwischenspeichern entnimmt, elektrischen Strom erzeugt, und diesen an eine zweite Energiemanagementeinheiten weiterleitet, wo er verbraucht wird. Eine solche Ausführungsform hat beispielsweise den Vorteil, dass sich so faktisch die Kapazität zur Stromerzeugung der zweiten Energiemanagementeinheit erhöhen, wenn die erste Energiemanagementeinheit diese Kapazität nicht benötigt.

Alternativ oder zusätzlich können die erfindungsgemässen Energiemanagementeinheiten auch Energie in Form von Betriebsstoffen austauschen, d.h. eine erste Energiemanagementeinheit leitet fluide Betriebsstoffe aus Ihren Zwischenspeichern über das Transportsystem des zweiten Energieversorgungsnetzwerks an eine zweite Energiemanagementeinheit, welche diese Betriebsstoffe in ihren Zwischenspeichern speichert und/oder zur Energiegewinnung einsetzt. Eine solche Ausführungsform hat beispielsweise den Vorteil, dass sich so faktisch die Kapazität der Zwischenspeicher der zweiten Energiemanagementeinheit erhöhen lässt, indem sie die Zwischenspeicher der ersten Energiemanagementeinheit nutzt. Ein anderer Vorteil ist die flexible Allozierung von Energie in speicherbarer Form, nämlich fluiden Betriebsstoffen, auf die verschiedenen Energiemanagementeinheiten, so dass das System schnell auf sich ändernde Bedarfsanforderungen eingehen kann, ohne dass das erste Energieversorgungsnetzwerks und/oder das zweite Energieversorgungsnetzwerk sowie die externen Energieerzeugungseinheiten Kapazitäten aufweisen müssen, die erheblich über dem durchschnittlich erforderlichen Kapazitätsniveau liegen.

Alternativ oder zusätzlich können die erfindungsgemässen Energiemanagementeinheiten auch anfallende Restgasen über ein Restgas-Transportsystem des Energieversorgungssystems auszutauschen, d.h. eine erste Energiemanagementeinheit leitet Restgase aus Ihren Zwischenspeichern über das Restgas-Transportsystem an eine zweite Energiemanagementeinheit, welche diese Restgase in ihren Zwischenspeichern zur späteren Rückführung speichert. Eine solche Ausführungsform hat beispielsweise den Vorteil, dass sich so faktisch die Kapazität der Restgas-Zwischenspeicher der ersten Energiemanagementeinheit erhöhen lässt, indem sie die Restgas-Zwischenspeicher der zweiten Energiemanagementeinheit nutzt.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, und sind nicht dazu geeignet, die Erfindung auf die hierin offenbarten Merkmale zu beschränken.
- Figur 1: zeigt schematisch eine mögliche Ausgestaltungsform eines erfindungsgemässen Energieversorgungssystems, in Wechselwirkung mit einem übergeordneten Energieversorgungsnetz, und einem lokalen Energieversorgungsnetz.
- Figur 1a: zeigt schematisch eine mögliche Ausgestaltungsform eines gemeinsamen Transportsystems für flüssige Betriebsstoffe und Restgase.
- Figur 1b: zeigt schematisch eine mögliche Ausgestaltungsform einer Fördereinheit eines Transportsystems aus Figur 1a.
- Figur 2: zeigt schematisch eine mögliche Ausgestaltungsform einer Energieerzeugungs-Einheit für den Einsatz in einem Energieversorgungssystems wie in Figur 1 gezeigt.
- Figur 3: zeigt schematisch eine weitere mögliche Ausgestaltungsform einer Energieerzeugungs-Einheit für den Einsatz in einem Energieversorgungssystems wie in Figur 1 gezeigt.
- Figur 4: zeigt schematisch eine mögliche Ausgestaltungsform einer erfindungsgemässen Energiemanagementeinheit, in Wechselwirkung mit einem erfindungsgemässen Energieversorgungssystem und einem lokalen Energieversorgungsnetzwerk.
- Figur 5: zeigt schematisch eine weitere mögliche Ausgestaltungsform einer erfindungsgemässen Energiemanagementeinheit, zur Versorgung eines lokalen Energieversorgungsnetzwerks, mit einem Stromnetz und einem Fernwärmenetz.
- Figur 6: zeigt schematisch eine weitere mögliche Ausgestaltungsform einer erfindungsgemässen Energiemanagementeinheit analog zu Figur 5, mit Mitteln zum Auffangen von Restgasen der energetischen Verwertung der fluiden Betriebsstoffe und deren Rückführung in das zweite Energieversorgungsnetzwerk eines erfindungsgemässen Energieversorgungssystems.

### Ausführung der Erfindung

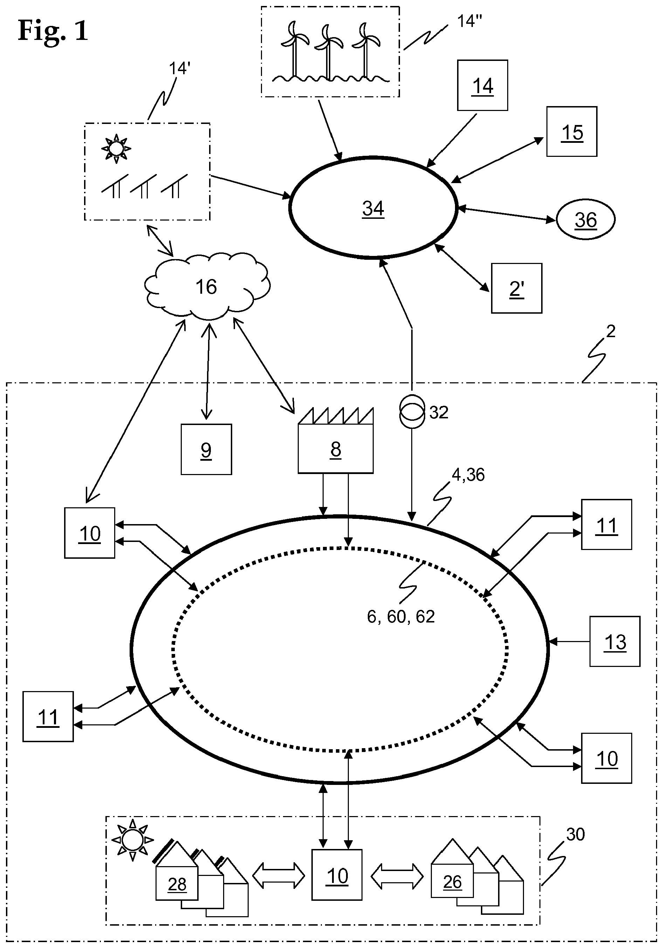

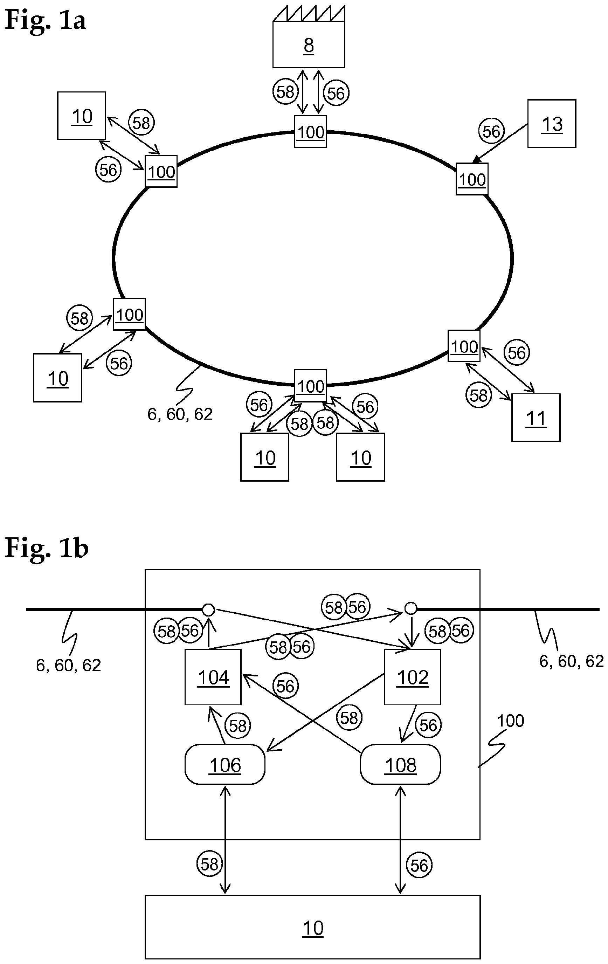

Eine beispielhafte Ausgestaltungsform eines erfindungsgemässen Energieversorgungssystems 2 ist in Figur 1 schematisch gezeigt. Ein erstes Energieversorgungsnetzwerk 4 umfasst ein Stromnetz 36 zur Verteilung der elektrischen Energie innerhalb des Energieversorgungssystems. Dieses Stromnetz 4 kann beispielsweise als regionales Mittelspannungsnetz ausgestaltet sein. Ein zweites Energieversorgungsnetzwerk 6 umfasst ein Transportsystem 60 zum Transport von fluiden, also flüssigen oder gasförmigen, Betriebsstoffen als zweiter Energieform. Im gezeigten Beispiel ist das Transportsystem 60 als Ringleitungssystem ausgestaltet, es kann jedoch topologisch auch anders gestaltet sein, zum Beispiel als verzweigtes Leitungsnetz.

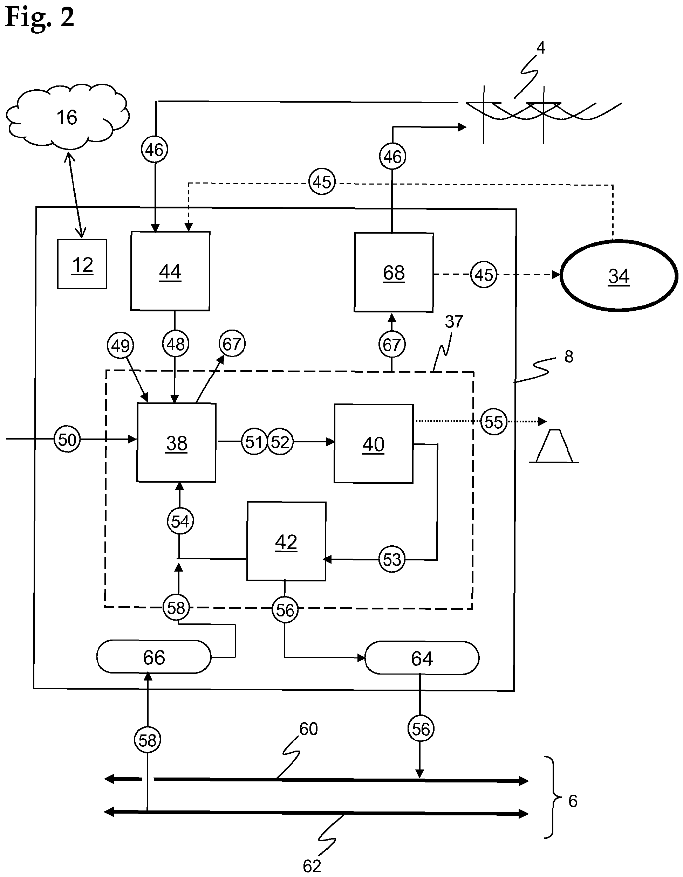

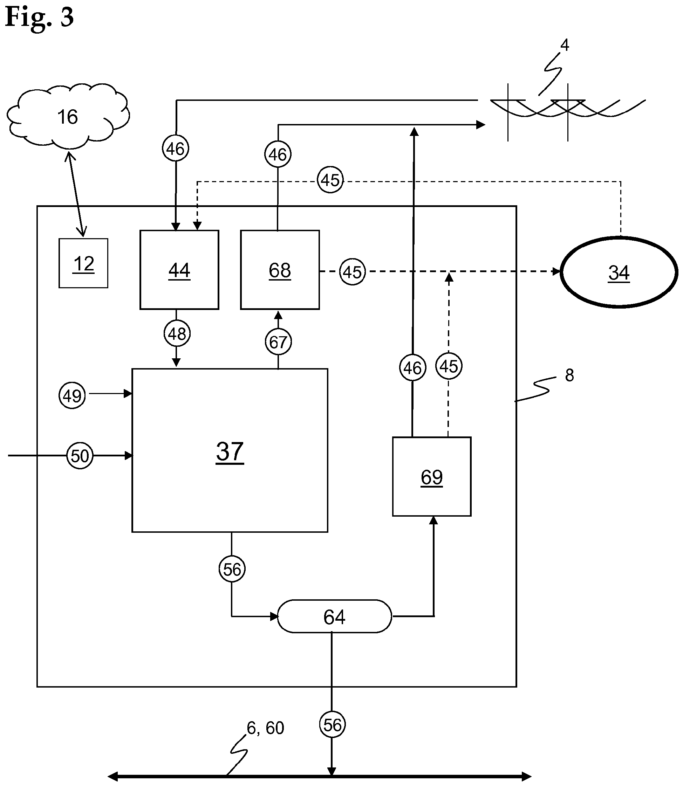

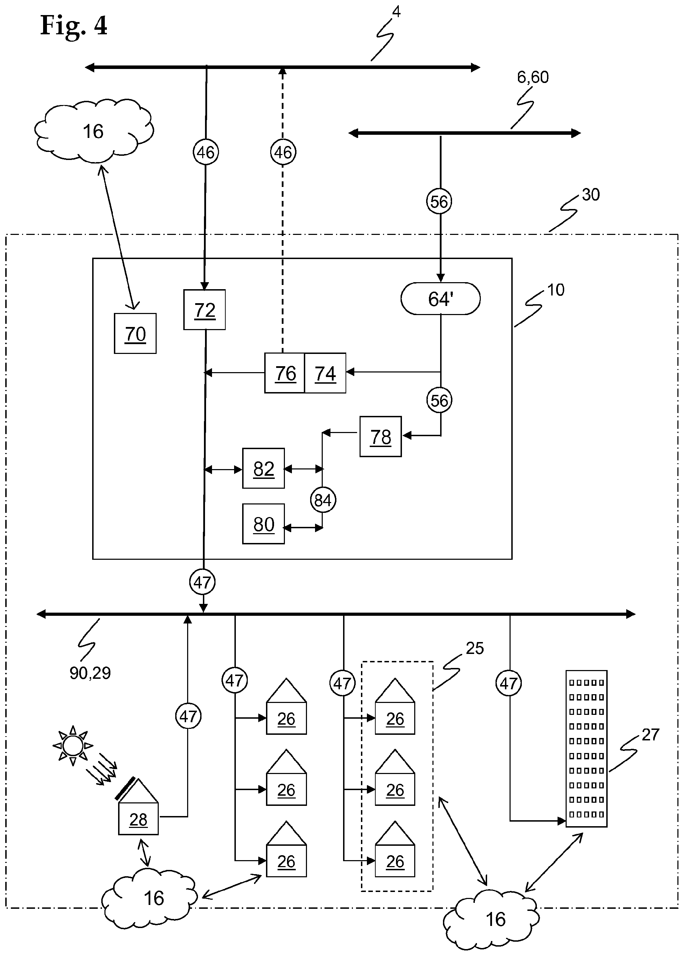

Eine Energieerzeugungseinheit 8, die in den Figuren 2 und 3 noch genauer dargestellt wird, erzeugt die fluiden Betriebstoffe und speist diese ins Transportsystem 60 ein. Mehrere generische Energieverbraucher 11 beziehen Energie von den beiden Energieversorgungsnetzwerken 4, 5, ebenso wie mehrere Energiemanagementsysteme 10 zur Energieversorgung von lokalen Energieversorgungssystemen 32. Mögliche Ausführungsformen von erfindungsgemässen Energiemanagementsystemen 10 werden in den Figuren 4, 5 und 6 besprochen. Ebenfalls Teil des Netzwerkes 4 können kleinere Elektrizitätskraftwerke 13 sein, beispielsweise kleinere Windkraftwerke und Wasserkraftwerke.

Das Energieversorgungssystem 2, genauer gesagt das Stromnetz 4, 36 des Energieversorgungssystems, ist über ein Umspannwerk an ein Stromnetz einer höheren Hierarchiestufe 34 angebunden, hier beispielsweise einem überregionalen Hochspannungsnetz 34, von welchem es elektrische Energie bezieht. An dem übergeordneten Stromnetz 34 können wie hier gezeigt weitere regionale Stromnetze 36' und andere erfindungsgemässe Energieversorgungssysteme 2' angebunden sein. Verschiedene Elektrizitätskraftwerke 14, 15 liefern Strom in das Hochspannungsnetz 34, beispielsweise photovoltaische oder solarthermische Gross-Kraftwerke 14' und Windkraftwerke 14".

Eine Steuereinheit 9 des erfindungsgemässen Energieversorgungssystems 2 ist über ein nicht näher spezifiziertes, generisches Kommunikationsnetzwerk 16, beispielsweise das Internet, ein drahtloses Telekommunikationsnetzwerk, oder ein speziell zu diesem Zweck aufgebautes drahtgestütztes Kommunikationsnetzwerk, mit den Energieerzeugungseinheiten 8, den erfindungsgemässen Energiemanagementeinheiten 10 und den anderen generischen Energieverbrauchern 11 und Energieproduzenten 13 verbunden, und kann mit diesen Daten und Steuerbefehle austauschen. Die Steuereinheit 9 kann im gezeigten Beispiel auch mit externen Anlagen wie beispielsweise Kraftwerk 14' kommunizieren, oder entsprechenden Steuerstellen des übergeordneten Netzes 34.

Die Steuerungsvorrichtung 9 eines erfindungsgemässen Energieversorgungssystems 2 hat den Zweck, eine effiziente Versorgung der verschiedenen Energieverbraucher-Einheiten 10, 11 mit fluiden Betriebstoffen zu ermöglichen, so dass eine möglichst kleine Dimensionierung des Betriebstoff-Transportsystems des zweiten Energieversorgungsnetzwerks 6 möglich ist, sowohl in Bezug auf den Leitungsquerschnitt als auch den Betriebsdruck.

Vorteilhaft wird die Versorgung der einzelnen Energiemanagementeinheiten gestaffelt durchgeführt. Auch die Rückführung der Restgase 58 in das Leitungssystem 62, falls vorhanden, kann gestaffelt gesteuert werden. Anstatt also jeder Energieverbraucher beliebig und nach Bedarf Energie aus dem zweiten Energieversorgungsnetzwerk 6 bezieht und Restgase hineinpumpt, erfolgt der Bezug koordiniert, so dass wesentlich geringere Spitzenvolumina auftreten. Die verschiedenen Energieverbraucher-Einheiten speichern die fluiden Betriebsstoffe und die Restgase, in Tanks oder Druckspeichern, bis die Betriebstoffe verwertet bzw. die Restgase zurückgefördert werden. Die zentrale Steuerung der Versorgung erlaubt neben einer minimalen Dimensionierung des Versorgungsnetzwerkes auch eine minimale Auslegung dieser Zwischenspeicher, gegenüber einer möglichen Lösung mit extrem grossen Zwischenspeichern und ohne zentrale Steuerung.

In einer anderen vorteilhaften Variante kann das zweite Energieversorgungsnetzwerk 6 so ausgestaltet werden, dass flüssige Betriebstoffe und Restgase beide über ein gemeinsames Leitungssystem transportiert werden. Zu diesem Zweck werden die beiden verschiedenen Medien pulsförmig gefördert, d. h. zu einem bestimmten Zeitpunkt wird jeweils nur ein Medium gefördert, wobei je nach Bedarf zwischen den verschiedenen Medien gewechselt wird. So wird beispielsweise während eines ersten Förder-Pulses flüssiger Betriebstoff von der Energieerzeugungseinheit durch das Leitungssystem zu einem oder mehreren Energiemanagementsystemen oder anderen Energieverbrauchern gepumpt, welche den Betriebstoff aufnehmen und Zwischenspeichern. Während eines zweiten Förderpulses wird verdichtetes Restgasgemisch von den Energiemanagementsystemen oder anderen Energieverbrauchern durch das gleiche Leitungssystem in entgegen gesetzter Richtung zur Energieerzeugungseinheit gepumpt.

Die Regelung der Pulse kann bedarfgesteuert sein, oder gemäss einem vorgegebenen periodischen Muster erfolgen.

Eine solche vorteilhafte Lösung benötigt nur ein Leitungssystem, und ist deshalb kostengünstiger in Bau und Wartung. Die beiden Medien (flüssige Betriebsstoffe und Restgas-Gemisch) sind aufgrund ihrer verschiedenen physikalisch-chemischen Eigenschaften (flüssig bzw. gasförmig, stark unterschiedliche Dampfdrücke) problemlos trennbar. Im flüssigen Betriebstoff verbleiben praktisch keine Reste von gasförmigem Restgas. Anteil von dampfförmigem Betriebstoff im Restgas lassen sich durch Kondensation abtrennen und wiedergewinnen. Zudem bleibt der Partialdruck/Gasdruck des Betriebsstoffs im Restgas bei konstanter Temperatur gleich, so dass durch einen hohen Betriebsdruck der relative Anteil minimiert werden kann. Solche Betriebstoffanteile können jedoch auch im Restgasgemisch belassen werden, da diese bei der Verarbeitung der Restgase ebenfalls automatisch rezykliert werden und wieder als Betriebsstoffe zur Verfügung stehen.

Ein gemeinsames Leitungssystem ist vor allem für räumlich kleinere Energieversorgungssysteme geeignet, da ansonsten die Wechselphase zwischen den verschiedenen Medien aufgrund des grösseren Volumens des Leitungssystems zu lange dauert. Der Grund dafür liegt darin, dass das Leitungssystem bei einem Medienwechsel jeweils vom vorherigen Medium entleert und mit dem anderen Medium befüllt werden muss, bevor effektiv ein Transport erfolgt. Alternativ können auch die Förder-Pulse länger gewählt werden, damit die Wechselphasen ohne Förderleistung weniger relevant sind.

Alternativ können flüssige Betriebsstoffe 56 auch gleichzeitig mit dem Restgas-Gemisch 58 durch ein gemeinsames Leitungssystem 6, 60, 62 gefördert werden, wobei in einem solchen Fall der Transport abschnittsweise zwischen Fördereinheiten 100 erfolgt. Ein solches System ist in Figur 1a schematisch dargestellt. Die verschiedenen Einheiten 8, 10, 11, 13, welche Betriebsstoffe 56 in das gemeinsame Transportsystem 60, 62 einspeisen bzw. aus diesem entnehmen sowie Restgase 58 in das gemeinsame Transportsystem 60, 62 einspeisen bzw. aus diesem entnehmen, sind jeweils über eine Fördereinheit 100 mit dem gemeinsamen Transportsystem verbunden. Es können auch mehrere Einheiten an einer gemeinsamen Fördereinheit 100 angehängt sein, wie beispielsweise unten in Figur 1a dargestellt, wo zwei Energiemanagementeinheiten 10 mit einer Fördereinheit 100 operativ verbunden sind.

Zwei Fördereinheiten 100 sind jeweils über einen Abschnitt der Transportleitung verbunden, wobei der Transport von Betriebsstoffen und/oder Restgasen jeweils unidirektional erfolgt. Die dargestellte kreisförmige Leitungstopologie ist dabei nur als Beispiel zu verstehen. Ebenso möglich sind auch sternförmige Netztopologien, oder Netzwerke. Entsprechend können Fördereinheiten 100 auch nur mit einem Leitungsabschnitt verbunden sein, oder mit drei oder mehr Abschnitten.

Eine vorteilhafte Ausführungsform einer Fördereinheit 100 ist schematisch in Figur 1b dargestellt. Die Fördereinheit ist mit den Enden zweier Leitungsabschnitte des Transportsystems 6, 60, 62 verbunden. Ein beliebiges Gemisch von Restgasen 58 und flüssigem Betriebsstoff 56, das durch die Leitungsabschnitte gefördert wird, gelangt durch entsprechende Weichen-Vorrichtungen, beispielsweise entsprechende Ventilvorrichtrungen in ein Auftrennmodul 104, in welchem Restgase 58 und Betriebsstoffe 56 physikalisch aufgetrennt und in entsprechenden Zwischenspeichern 106, 108 gespeichert werden. Eine Energiemanagementeinheit 10 entnimmt Restgase und Betriebsstoffe aus diesen Zwischenspeichern, bzw. speist Restgase und Betriebsstoffe in die Zwischentanks zurück.

Ein Fördermodul 104 wiederum, umfassend beispielsweise eine oder mehrere Pumpeneinheiten, fördert die gewünschten Mengen Restgase und Betriebsstoffe aus den Zwischenspeichern in die Leitungsabschnitte.

Ein Steuerungsmodul (nicht dargestellt) der Fördereinheit steuert die Entnahme und Einspeisung der Restgase und Betriebsstoffe in die beiden Leitungsabschnitte entsprechend den gewünschten Vorgaben. Vorteilhaft kommunizieren die Steuerungsmodule der verschiedenen Fördereinheiten 100 des Transportsystems miteinander, um die Förderrichtungen und Mengen zu koordinieren und einen möglichst effizienten Transport zu erreichen.

In einer Variante des gezeigten Systems kann in der Fördereinheit ein einschaltbarer Bypass vorgesehen sein, um die beiden Leitungsabschnitte reversibel direkt miteinander zu verbinden, wenn die Fördereinheit vorübergehend aus dem Transportsystem ausgekoppelt werden soll.

Gleichzeitig kann auch die Einspeisung von fluiden Betriebsstoffen in das zweite Energieversorgungsnetzwerk 6 und/oder die Entnahme von Restgasen zentral gesteuert werden, was vor allem dann sinnvoll ist, wenn mehrere Energieerzeugungseinheit 8 vorhanden sind. Bei einer einzigen Energieerzeugungs-Einheit kann es ausreichend sein, einen grossen Zwischenspeicher vorzusehen, und den Druck im System des Energieversorgungs-Netzwerks innerhalb gewisser Betriebsgrenzen zu halten.

Die Steuerungseinheit 9 kann als separates Rechnersystem realisiert sein, oder als logischer Verbund verschiedener Rechnersysteme, wobei der räumliche Standort dieser Rechnersysteme nicht relevant ist. Die Steuerungseinheit 9 kann also beispielsweise am Standort einer Energieerzeugungseinheit 8 vorgesehen sein, oder an einem beliebigen anderen Standort. Ebenso ist eine dezentrale Ausgestaltung der Steuerungsvorrichtung möglich, mit mehreren Teilmodulen, die untereinander kommunizieren. Die zentrale Steuerung des erfindungsgemässen Energieversorgungssystem 2 ist dabei so zu verstehen, dass faktisch die Daten aller verschiedener operativen Einheiten 8, 10, 11, 13 in den Steuerungsprozess einfliessen, unabhängig davon, ob die eigentlichen Steuerungsbefehle an die Einheiten von einem bestimmten Rechnersystem generiert werden, oder die verschiedenen Einheiten sich untereinander in geeigneter Weise koordinieren.

Eine beispielhafte Energieerzeugungseinheit 8 des erfindungsgemässen Energieversorgungssystems 2 ist in Figur 2 vereinfacht schematisch dargestellt, in Form einer Anlage zur thermisch-chemischen Verwertung von kohlenstoffhaltigen Substanzen wie sie in WO 201 1/061299 A1 offenbart ist.

In einem im Wesentlichen geschlossenen Kreislauf wird in der thermisch-chemischen Verwertungsanlage 37 kohlenstoffhaltiges Ausgangsmaterial 50 und Wasserstoffgas 48 als chemische Energieträger sowie Wasser 49 in fluide Betriebsstoffe 56 umgewandelt, beispielsweise gasförmige Kohlenwasserstoffe wie Methan, Ethan oder flüssige Kohlenwasserstoffe wie beispielsweise Diesel-ähnliche Gemische, oder andere chemische Energieträger wie beispielsweise Methanol.

Als kohlenstoffhaltiges Ausgangsmaterial 50 kann beispielsweise Haushaltsmüll verwendet werden, oder andere minderwertige chemische Energieträger, beispielsweise Altreifen, Altöl und Klärschlamm. Ebenfalls geeignet ist kohlendioxid-neutrale Biomasse wie beispielsweise Holzschnitzel. Wasserstoffgas 48 dient sowohl als Wasserstoffquelle als auch als chemischer Energieträger. Wird dem Kreislauf Kohlendioxid als kohlenstoffhaltiges Ausgangsmaterial zugeführt, beispielsweise durch das im Wesentlichen aus Kohlendioxid bestehende Restgas 58 aus dem zweiten Energieversorgungsnetzwerk 6, muss entsprechend mehr Wasserstoffgas 48 zugeführt werden.

Molekularer Wasserstoff wird mit elektrischer Energie durch Elektrolyse aus Wasser hergestellt. Die elektrische Energie kann dabei insbesondere aus regenerativen Energiequellen wie Wasserkraft, Windkraft, Solarenergie etc. stammen, oder aus anderen Quellen wie beispielsweise Kernkraftwerken, die ihre konstant erzeugte thermische Energie zu Zeiten von tiefem Strombedarf ansonsten nicht nützen könnten. Die elektrische Energie kann aus dem ersten Energieversorgungsnetzwerk 4 bezogen werden (was wiederum mit dem Hochspannungsnetz 34 verbunden ist), oder alternativ direkt aus dem Hochspannungsnetz 34, was sich primär aus der konkreten Ausgestaltung des Stromnetzes ergibt.

Ob das Wasserstoffgas direkt am Ort des Verbrauchs erzeugt wird, also innerhalb der Anlage 2, oder am Ort der Stromherstellung, ist nicht erfindungsrelevant. Jedoch ist aus logistischen Gründen eine Herstellung in der Nähe des späteren Verbrauchs vorteilhaft.

Es können auch Speichervorrichtungen für Wasserstoffgas vorgesehen sein (nicht dargestellt), beispielsweise in Form von Metallhydrid-Speicher, oder kostengünstiger in Form von Drucktanks. Die Umwandlung von elektrischer Energie in chemische Energie in Form von Wasserstoff erlaubt es somit, einen Angebotsüberhang an elektrischer Energie zu nutzen. Da die Produktionsleistung sehr schnell gesteuert werden kann, können so auch kurzfristige Produktionsspitzen in einem lokalen Netz, beispielsweise von Hausdach-Photovoltaikanlagen, aufgenommen werden, ohne dass es zu einer Überlastung des Netzes kommt. Entsprechend können die Kapazitäten des Netzes besser ausgenutzt werden, ohne das das Risiko einer Überlast entsteht.

In der Verwertungsanlage 37 wird in einer ersten Stufe 38 und zweiten Stufe 40 das kohlenstoffhaltige Ausgangsmaterial 50 in Synthesegasgemisch 53 umgewandelt. In der ersten Stufe 38 werden die kohlenstoffhaltigen Substanzen 50 pyrolysiert, wobei Pyrolysekoks 51 und Pyrolysegas 52 entstehen. In der zweiten Stufe 40 wird der Pyrolysekoks 51 aus der ersten Stufe vergast, wobei Synthesegasgemisch 53 entsteht, und Schlacke und andere Reststoffe 55 übrig bleiben. Diese werden ausgetragen und weiter verwerte oder deponiert. In einer dritten Stufe 42 werden aus dem Synthesegasgemisch 53 die flüssigen und/oder gasförmigen Betriebsstoffe 56 erzeugt. Das nach der Synthesestufe 42 verbleibende Rücklaufgasgemisch 54 enthält im Wesentlichen Kohlendioxid, und wird als Vergasungsmittel wieder in die erste Stufe 38 geleitet. Alle drei Stufen sind druckfest geschlossen und bilden einen im Wesentlichen geschlossenen Kreislauf.

Mit eine solchen Anlage 2 können feste, flüssige oder gasförmige Substanzen 50 effizient in gasförmige oder flüssige Betriebsstoffe 34 umgewandelt werden. Zusätzlich kann die Anlage 2 thermische Energie in Form von Prozessdampf 67 bereitstellen, aus dem mittels einem durch eine Dampfturbine betriebenen Generator 68 konstant elektrischer Strom 46 erzeugt wird, der in das Mittelspannungs-Stromnetz 4 eingespeist wird, und der Abdeckung der Grundlast dient. Alternativ kann in das Hochspannungs-Stromnetz 34 eingespeist werden.

Die in der Synthese-Stufe 42 erzeugten kohlenwasserstoffhaltigen Betriebsstoffe 56 werden in einem Zwischenspeicher 64, beispielsweise in Form eines Tanks, gespeichert. Bei der Auslegung des Zwischenspeichers kann auch das im Leitungssystem 60 vorhandene Betriebstoffvolumen berücksichtigt werden. Je nach Bedarfslage werden die fluiden Betriebstoffe 56 in das zweite Energieversorgungsnetzwerk 6, nämlich das Transportsystem 60 für fluide Betriebsstoffe, eingespeist. Da sind entsprechende Fördervorrichtungen vorgesehen (nicht dargestellt).

Bei räumlich kompakt ausgelegten Energieversorgungssystemen ist dieses Transportsystem vorteilhaft als Leitungssystem ausgelegt, beispielsweise in Form unterirdischen oder überirdisch verlegten Leitungen. Es können auch Abschnitte des Transportsystems mit Tankwagentransporten realisiert sein. Dies kann insbesondere vorteilhaft sein, wenn ein Energieversorgungssystem sich im Aufbau befindet, oder aus anderen Gründen eine fest installierte Leitung nicht möglich ist, beispielsweise aus Distanzgründen, oder aufgrund rechtlicher Rahmenbedingungen.

In dem in der Figur gezeigten Ausführungsbeispiel entnimmt die Energieerzeugungseinheit 8 Restgas 58, also das Gasgemisch, welche bei der energetischen Verwertung der fluiden Betriebstoffe durch Energieverbraucher 11 und Energiemanagementeinheiten 10 anfallen, aus einem Transportsystem 62 für Restgase 58 des zweiten Energieversorgungsnetzwerks 6. Ein Drucktank 66 dient als Zwischenspeicher. Dies erlaubt die unproblematische Überbrückung von Schwankungen im Energiebedarf bzw. im Massestrom der Restgase.

Das Restgas wird anschliessend in den geschlossenen Kreislauf der thermisch-chemischen Verwertungsanlage 37 eingespeist. Es resultiert ein geschlossener Kreislauf, so dass im Wesentlichen kein Kohlendioxid an die Atmosphäre abgegeben wird. Enthält das Restgas 58, neben dem Kohlendioxid und geringeren Anteilen an Kohlenmonoxid und unverwertetem Betriebsstoff, nicht verwertbare Inertgas-Anteile wie beispielsweise Stickstoff, so werden diese vorteilhaft entfernt.

Als fluide Betriebsstoffe eignen sich insbesondere flüssige Kohlenwasserstoffe bzw. Kohlenwasserstoffgemische, wie beispielsweise Diesel-ähnliche Gemische, oder andere organische Verbindungen, wie beispielsweise Methanol. Flüssige Betriebsstoffe erlauben einen grösseren Energiegehalt pro Volumen, und entsprechend eine kleineren Auslegung des Leitungsnetzes 60. Jedoch sind auch gasförmige Betriebstoffe möglich, insbesondere Methan, Ethan etc. Zu diesem Punkt wird auf die oben stehende Tabelle 1 verwiesen.

Die äussere Energiezufuhr erfolgt in der Energieerzeugungseinheit 8 über den Wasserstoff 58 bzw. die zu dessen elektrolytischen Herstellung notwendige elektrische Energie 46, und/oder über energiehaltige kohlenstoffhaltige Ausgangsmaterialien 38, wie beispielsweise kohlendioxidneutrale Biomasse oder schwierig zu verwertende Haushaltsabfälle. Um die Massenbilanz des erfindungsgemässen Energieversorgungssystems aufrecht zu erhalten, ist eine Zufuhr von kohlenstoffhaltigem Ausgangsmaterial 50 nur dann möglich bzw. notwendig, um Verluste an Kohlenstoffatomen im Massenfluss auszugleichen. wenn also nicht der gesamte Kohlenstoff zu der Energieerzeugungsseinheit 8 zurückgelangt.

Eine weitere mögliche Ausführungsform einer Energieerzeugungseinheit 8 in einem erfindungsgemässen Energieversorgungssystems 2 ist in Figur 3 dargestellt. In dieser Variante umfasst das zweite Energieversorgungssystem keine Transportvorrichtung für Restgase.

Analog zur Figur 2 nutzt eine Anlage 68 zur Herstellung von elektrischem Strom in Form eines durch eine Dampfturbine betriebenen Stromgenerators die Prozesswärme 67, welche in der kontinuierlich betriebenen thermisch-chemischen Verwertungsanlage 37 anfällt, um konstant elektrische Energie zu erzeugen.

Zusätzlich ist auch ein weitere Anlage 69 zur Herstellung von elektrischer Energie vorgesehen, welche ihre Energie aus den fluiden Betriebstoffen bezieht. Vorteilhaft ist eine solche Anlage als Wärmekraftmaschine ausgelegt, beispielsweise einem Dieselaggregat oder einer Gasturbine oder einer kombinierten Gas-Dampfturbine, mit welcher eine Generatorvorrichtung betrieben wird. Das eine solche Anlage im Rahmen ihrer Auslegung variabel zwischen der minimalem Leistung und maximalen Leistung gefahren werden kann, und die Betriebsstoffe aus dem Zwischenspeicher 64 entnommen werden, erlaubt es diese Anlage 69, die Bedarfspitzen im Netzwerk 4 des erfindungsgemässen Energieversorgungssystems 2 abzudecken, soweit diese im Zusammenspiel mit den erfindungsgemässen Energiemanagementeinheiten 10 noch auftreten, und so die Netzstabilität sicherzustellen.

Ebenfalls möglich ist die flexible Einspeisung von elektrischer Energie 45 in das übergeordnete Hochspannungsnetz 34, beispielsweise um Bedarfspitzen abzudecken, oder um indirekt 32 das erste Energieversorgungsnetzwerk 4 zu speisen. Überkapazitäten an fluidem Betriebstoff können so ebenfalls abgebaut werden.

Eine erfindungsgemässen Energiemanagementeinheit 10, als Teil sowohl eines erfindungsgemässen Energieversorgungssystems 2 als auch eines lokalen Energieversorgungssystems 30, ist schematisch in Figur 4 dargestellt.

Die erfindungsgemässe Energiemanagementeinheit hat den Zweck, ein lokales Energieversorgungsnetzwerk 29 in Form eines lokalen Niederspannungsnetzes 90 mit elektrischer Energie 47 zu versorgen. Das lokale Stromnetz versorgt mehrere kleinere Energieverbraucher 26, beispielsweise einzelnen Haushalte, und Grossverbraucher 27, beispielsweise Hochhäuser, Krankenhäuser, etc. Die Energiemanagementeinheit 10 bezieht dazu elektrische Energie 46 aus einem ersten Energieversorgungsnetzwerks 4 eines erfindungsgemässen Energieversorgungssystems 2, und transformiert 72 sie auf die Netzspannung des lokalen Stromnetzes 90 herunter. Weiter bezieht die Energiemanagementeinheit 10 fluide Betriebstoffe 56 aus einem Transportsystem 60 eines zweiten Energieversorgungsnetzwerks 6 des Energieversorgungssystems 2. Diese Betriebstoffe werden in einem Zwischenspeicher 64' gelagert, und mit geeigneten Vorrichtungen bei Bedarf zur Produktion von Strom 47 für das lokale Netz 90 eingesetzt. Beispielsweise kann ein Generator 76 durch einen mit den fluiden Betriebstoffen betriebenen Verbrennungsmotor angetrieben werden, oder eine Gasturbine.

Nötigenfalls kann eine Energiemanagementeinheit 10 das lokale Netz kurzfristig auch komplett vom ersten Energieversorgungsnetzwerks 4 abkoppeln, wenn dies beispielsweise für den Erhalt der Netzstabilität notwendig ist. Auch kurzfristige Stromausfälle können auf diese Weise aufgefangen werden. Nähert sich das Ende dieser Versorgungsautonomie, können zudem entsprechende Warnungen an die lokalen Verbraucher gesandt werden. Computersysteme können so beispielsweise rechtzeitig heruntergefahren werden, und für kritische Systeme wie beispielsweise Krankenhäuser können Notstrom-Aggregate frühzeitig hochgefahren werden.

Alternativ oder zusätzlich möglich ist der Einsatz einer Brennstoffzellenvorrichtung 78 zur Erzeugung von Gleichstrom 84, und dessen anschliessende Wechselrichtung 82 zwecks Einspeisung in das lokale Stromnetz 90. Ebenfalls möglich ist der Einsatz von geeigneten Stromspeichervorrichtungen wie beispielsweise Hochleistungskondensatoren oder Akkumulatoren 80.

Die Anlage 74, 76 kann auch so ausgestaltet sein, dass anstatt Niederspannung 47 ins lokale Netz 90 einzuspeisen, Mittelspannung 46 erzeugt und ins erste Energieversorgungsnetzwerk 4 einspeist. Auf diese Weise kann zusätzlich zur lokalen Stromversorgung die Netzstabilität des Mittelspannungsnetzes 45 verbessert werden. Möglich ist so beispielsweise, die Spitzenlast-Stromproduktionsanlage 69 in einer Energieerzeugungseinheit 10 wie in Figur 3 gezeigt zu ersetzen durch eine Mehrzahl von kleineren Spitzenlast-Stromproduktionsanlagen 74, 76, welche über das Netz 4 verteilt angeordnet sind.

Das lokale Stromnetz 90 kann auch kleinere Stromproduktionsanlagen 28 enthalten, welche die erzeugte elektrische Energie in das lokale Stromnetz einspeisen. Typische Beispiele dafür sind Photovoltaikanlagen kleiner bis mittlerer Dimensionierung, wie sie zum Beispiel auf den Dächern von Häusern und Fabrikgebäuden montiert sind.

Die Energiemanagementeinheit 10 umfasst eine Steuerungsanlage 70 zur Steuerung der verschiedenen Funktionselemente der Gesamtanlage, insbesondere den Bezug von fluiden Betriebsstoffen 56 aus dem zweiten Energieversorgungsnetzwerk 6, und die Stromproduktion aus den fluiden Betriebsstoffen.

Die Steuerungsanlage 70 hat zum einen den Zweck, den Bezug von Energie in den beiden Formen Elektrizität 46 und fluide Betriebstoffe 56 aus dem ersten 4 und zweiten 6 Energieversorgungsnetzwerk des Energieversorgungssystem 2 so zu steuern, dass eine zeitlich möglichst gleichmässige Belastung der entsprechenden Netze 36, 60 erzielt wird. Zu diesem Zweck kann die Steuerungsanlage 70 über ein geeignetes Kommunikationsnetzwerk 16 mit einer Steuerungseinheit 9 des Energieversorgungssystems 2 kommunizieren, um die Aktivitäten der verschiedenen Einheiten 8, 10, 11 13 des Energieversorgungssystem 2 aufeinander abzustimmen.

Die Steuerungsanlage 70 kann in einer möglichen, einfachen Variante die Bezugsraten an Energie 46, 56 und die Eigenproduktion 74/76, 78 der Energiemanagementeinheit 10 so steuern, das nur die Grundlast-Komponente oder ein Teil dieser Grundlast-Komponente des Energiebedarfs des lokalen Energieversorgungssystems 30 über das Stromnetz 4, 36 gedeckt wird, und der restliche Bedarf über die Stromproduktion 74, 76 mit Hilfe der Betriebstoffe 56. Die Betriebstoffe wiederum werden dem Transportsystem 60 kontinuierlich entnommen, wobei der Zwischenspeicher 64' als Puffer dient.

Ebenfalls möglich sind zeitlich abgestimmte, sequentielle Bezüge von fluiden Betriebstoffen aus dem zweiten Netz 6 durch die verschiedenen Energiemanagementeinheiten 10 und generischen Energieverbraucher 11, wobei die Koordination über die Steuerungseinheit 12 des Energieversorgungssystem 2 erfolgt. So können beispielsweise die verschiedenen Bezüger 10, 11 nacheinander ihre Zwischenspeicher mit grösserem Transportdurchsatz auffüllen, anstatt alle gleichzeitig mit geringerem Durchsatz.

Der zweite Zweck der Steuerungsanlage 70 ist Optimierung der Auslastung des lokalen Netzwerkes. Vorteilhaft ist die Steuerungsanlage 70 so ausgestaltet, dass sie auch mit den einzelnen Energieverbrauchern 26, 27, oder Gruppen 25 solcher Verbraucher kommunizieren kann, um Daten zum voraussichtlichen und tatsächlichen Energiebedarf zu erfassen. Dies kann beispielsweise mit sog. Smart Metern geschehen.

Ebenfalls kann die Steuerungsanlage 70 Daten zur Stromproduktion der lokalen Energieerzeuger 28 erfassen. Diese Daten können dann wiederum auch zur Optimierung der Energiebezüge aus dem Energieversorgungssystem 2 genutzt werden, und zur Steuerung der Produktion von Wasserstoff in den Elektrolyseanlagen 44 der Energieerzeugungseinheiten 8.

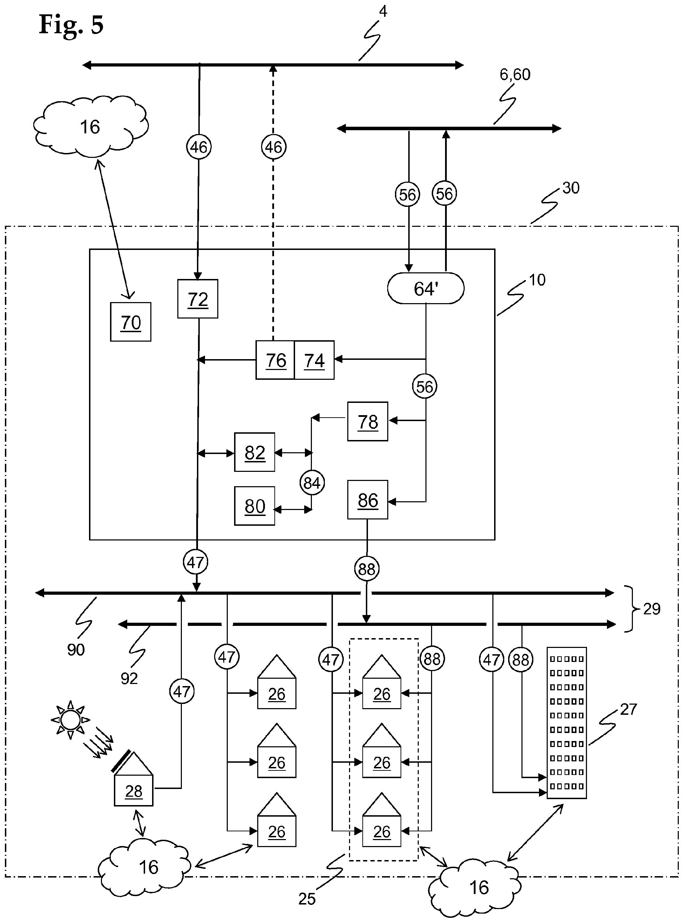

Eine weitere Ausführungsvariante einer erfindungsgemässen Energiemanagementeinheit 10 ist in Figur 5 dargestellt. Das Energieversorgungssystem 29 des lokalen Energieversorgungssystems 30 weist in diesem Erfindungsbeispiel neben einem Stromnetz 90 noch ein Fernwärmesystem 92 auf, mit welchem zumindest ein Teil der Energieverbraucher 26, 27 mit Wärmeenergie 88 versorgt wird. Die Energiemanagementeinheit 10 umfasst dazu eine Heizungsanlage 86, beispielsweise ein Heizkessel, in dem durch die Verbrennung der fluiden Betriebstoffe 56 ein Wärmeträgermedium erhitzt wird, beispielsweise Wasser oder Dampf. Dieses wird dann in das Fernwärmenetz eingespeist.

In der in Figur 5 gezeigten Ausführungsform ist die Energiemanagementeinheit 10 dafür eingerichtet, fluide Betriebstoffe 56 nicht nur aus dem zweiten Energieversorgungsnetzwerk 6 zu entnehmen, sondern sie bei Bedarf auch wieder in dieses einzuspeisen. Auf diese Art und Weise kann ein über das gesamte Energieversorgungsnetzwerk verteilter koordinierter Zwischenspeicher für fluide Betriebstoffe realisiert werden, was besonders vorteilhaft ist für räumlich ausgedehnte Netzwerke, um Engpässe bei Spitzenbelastungen weiter zu verringern.

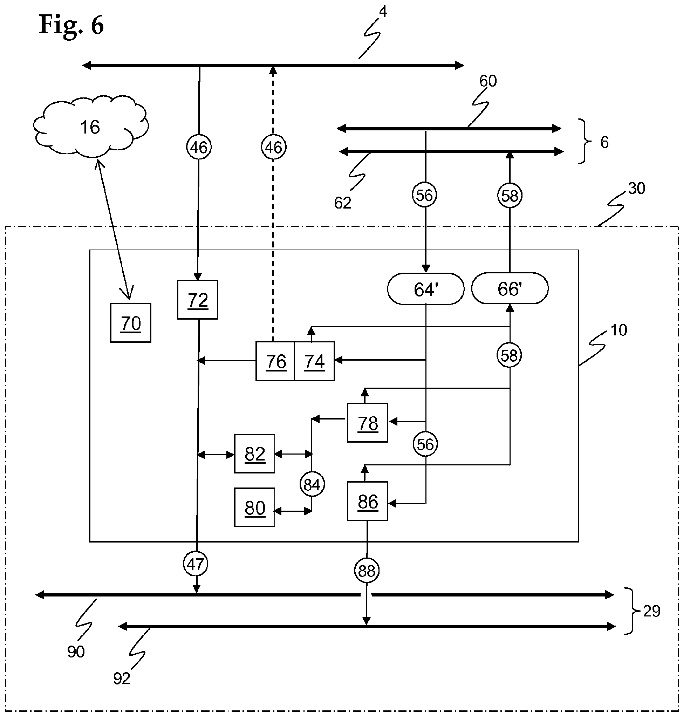

Noch eine weitere vorteilhafte Ausgestaltungsform einer erfindungsgemäss Energiemanagementeinheit 10 im operativer Wechselwirkung mit einem erfindungsgemässen Energieversorgungssystem 2 ist in Figur 6 gezeigt. Das lokale Energieversorgungssystem 29 ist analog zu Figur 5 ausgestaltet, wobei die lokalen Verbraucher 26, 27 nicht dargestellt sind.

Das zweite Energieversorgungssystem 6 umfasst zwei Transportsysteme 60, 62 analog zum Erfindungsbeispiel in Figur 2, nämlich zum einen für die fluiden Betriebstoffe 56, und zum anderen für die bei der energetischen Verwertung der genannten Betriebstoffe anfallenden Restgase 58.

Die thermische oder elektrische Energie erzeugende Oxidation der fluiden Betriebsstoffe in den verschiedenen Anlagen der Energiemanagementeinheit erfolgt vorteilhaft mit sauerstoffangereicherter Luft, vorzugsweise mit einem Sauerstoffanteil von >95%, oder mit reinem Sauerstoff, anstatt mit Luft, um Anteile an Inertgasen zu verringern oder zu vermeiden. Die energetische Verwertung der Betriebstoffe kann beispielsweise mit Verbrennungskraftmaschinen stattfinden, in welcher die bei der Oxidationsreaktion anfallende Wärme in einer Wärmekraftmaschine in mechanische Arbeit umgewandelt wird, und diese wiederum mittels eines Generators in elektrische Energie, oder mit Brennstoffzellen, in welchen die Oxidationsreaktion direkt zur Stromerzeugung genutzt wird. Bei der Verwendung von reinem Sauerstoff anstatt verbleiben in den anfallenden Reaktionsprodukten im Wesentlichen nur Kohlendioxid und Wasserdampf. Je nach Stöchiometrie der Reaktion können die anfallenden Gase auch gewisse Anteile an Kohlenmonoxid und unreagiertem Betriebsstoff enthalten.

Die bei der energetischen Verwertung der fluiden Betriebstoffe in den Anlagen 74, 78, 86 der Energiemanagementeinheit 10 anfallenden Restgase in der Form von Kohlendioxid, Wasserdampf und gegebenenfalls Anteilen an Kohlenmonoxid und unverwertetem Betriebsstoff werden gesammelt. Wasserdampf wird vorteilhaft auskondensiert, so dass nur gasförmige Restgase 56 verbleiben, die in einem Zwischenspeicher 66' gesammelt und in das Energieversorgungsnetzwerk 6, 62 eingespeist werden. Aus diesem werden sie durch die mindestens eine Energieerzeugungseinheit 8 wieder entnommen und wieder als Kohlenstoffquelle der Betriebstoffproduktion zugeführt, so dass der Kreislauf geschlossen wird.

Ist das Transportsystem 60 durch einen batchweisen Transport von Betriebstoffen realisiert, beispielsweise mittels Tanklastwagen, dann könne die entsprechenden Tankfahrzeuge bei druckfester Auslegung auch für den Rücktransport der Restgase verwendet werden.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 2, 2': Energieversorgungssystem
- 4: erstes Energieversorgungsnetzwerk, Stromnetz
- 6: zweites Energieversorgungsnetzwerk
- 8: Energieerzeugungseinheit
- 9: Steuerungseinheit
- 10: Energiemanagementeinheit
- 11: Energieverbraucher
- 12: Steuerungsanlage
- 13: Kleinkraftwerk
- 14, 14', 14": Elektrizitäts-Kraftwerk
- 15: Speicher-Kraftwerk
- 16: Kommunikationsnetzwerk
- 18: Datenkommunikation
- 20: kohlenstoffhaltiger Energieträger
- 22: Leitungssystem für fluide Betriebsstoffe
- 24: Leitungssystem für Restgase
- 25: Gruppe von Energieverbrauchern
- 26: lokale Energieverbraucher
- 27: Grossverbraucher
- 28: lokale Energieerzeuger
- 29: lokales Energieversorgungsnetzwerk
- 30: lokales Energieversorgungssystem
- 32: Übergang zwischen verschiedenen Stromnetzen
- 34: Stromnetzwerk höherer Hierarchiestufe
- 36, 36': Stromnetzwerk niederer Hierarchiestufe
- 37: thermisch-chemische Verwertungsanlage
- 38: erste Stufe
- 40: zweite Stufe
- 42: dritte Stufe
- 43: Steuerungseinheit
- 44: Elektrolyseanlage
- 45: elektrische Energie, Hochspannung
- 46: elektrische Energie, Mittelspannung
- 47: elektrische Energie, Niederspannung
- 48: Wasserstoffgas
- 49: Wasser
- 50: kohlenstoffhaltiges Ausgangsmaterial, minderwertiger Energieträger
- 51: Pyrolysekoks
- 52: Pyrolysegas
- 53: Synthesegasgemisch
- 54: Rücklaufgasgemisch
- 55: Reststoffe
- 56: fluide Betriebstoffe, hochwertiger fluider Energieträger
- 58: Restgase
- 60: Transportsystem für fluide Betriebsstoffe, Leitungssystem
- 62: Transportsystem für Restgase, Leitungssystem
- 64, 64': Zwischenspeicher, Tank
- 66, 66': Zwischenspeicher, Tank
- 67: Prozesswärme, Heissdampf
- 68: Anlage zur Herstellung von elektrischem Strom, Dampfturbine mit Generator
- 69: Anlage zur Herstellung von elektrischem Strom, Gasturbine mit Generator
- 70: Steuerungsanlage
- 72: Transformator
- 73: Zwischenspeicher, Tank
- 74: Wärmekraftmaschine, Verbrennungsmotor, Gasturbine
- 76: Generator
- 78: Brennstoffzelle
- 80: Akkumulator
- 82: Wechselrichter/Gleichrichter
- 84: Gleichstrom
- 86: Heizungsanlage
- 88: Heisswasser
- 90: lokales Stromnetz, Niederspannungsnetz
- 92: Leitungssystem Wärmetransport (Fernwärme, Warmwasser, Dampf)
- 94: Leitungssystem Kältetransport (Kaltwasser)
- 100: Fördereinheit
- 102: Auftrennungsmodul
- 104: Fördermodul
- 106: Zwischenspeicher für Restgasanteil
- 108: Zwischenspeicher für Betriebsstoffanteil

## Patentansprüche

1. Energiemanagementeinheit (10) zur Versorgung eines lokalen Energieversorgungsnetzwerks (29), mit Vorrichtungen zur Entnahme von elektrischem Strom (46) aus einem übergeordneten Stromnetz (4, 36) eines Energieversorgungssystems (2), zu dessen Umwandlung in elektrischen Strom (47) niedrigerer Spannung, und zur Einspeisung dieses elektrischen Stroms niedrigerer Spannung in ein Stromnetz (90) des lokalen Energieversorgungsnetzwerks; und Vorrichtungen zur Entnahme von fluiden Betriebsstoffen (56) aus einem Transportsystem (6, 60) für fluide Betriebsstoffe des Energieversorgungssystems (2), zur Erzeugung von elektrischem Strom (47) aus den genannten fluiden Betriebsstoffen (56), und zur Einspeisung des genannten elektrischen Stroms in das genannte Stromnetz des lokalen Energieversorgungsnetzwerks; **gekennzeichnet durch** eine Steuerungsanlage (70), die dazu eingerichtet ist, über ein Kommunikationsnetzwerk (16) mit einer Steuerungseinheit (9) des Energieversorgungssystems (2) zu kommunizieren, und die Bezugsraten von elektrischem Strom (46) aus dem übergeordneten Stromnetz (4, 36) und von fluiden Betriebsstoffen (56) aus dem Betriebsstoff-Transportsystem (6, 60) so zu steuern, dass eine zeitlich möglichst gleichmassige Belastung der entsprechenden Versorgungsnetze (36, 60) erzielt wird, und/oder eine möglichst kleine Dimensionierung des zweiten Energieversorgungsnetzwerk (6, 60) in Bezug auf den Leitungsquerschnitt und/oder den Betriebsdruck erzielt wird.

2. Energiemanagementeinheit nach Anspruch 1, wobei die Steuerungsanlage (70) dazu eingerichtet ist, über ein Kommunikationsnetzwerk (16) mit lokalen Energieverbrauchern (26) und lokalen Energieerzeugern (28) des lokalen Energieversorgungsnetzwerks (29) zu kommunizieren.

3. Energiemanagementeinheit nach Anspruch 1 oder 2, wobei die Steuerungsanlage (70) dazu eingerichtet ist, die Energiemanagementeinheit (10) so zu steuern, dass sie im Wesentlichen nur die Grundlast des Strombedarfs des lokalen Energieversorgungsnetzwerks (29) aus dem übergeordneten Stromnetz (4, 36) bezieht, während die Spitzenlast des Strombedarfs des lokalen Energieversorgungsnetzwerks (29) durch die energetische Verwertung von fluiden Betriebsstoffen gedeckt wird.

4. Energiemanagementeinheit nach einem der Ansprüche 1 bis 3, wobei die Steuerungsanlage (70) dazu eingerichtet ist, die Energiemanagementeinheit (10) so zu steuern, dass die Bezugsrate von fluiden Betriebsstoffen (56) aus dem Betriebsstoff-Transportsystem (6, 60) im Wesentlichen zeitlich konstant ist.

5. Energiemanagementeinheit nach einem der Ansprüche 1 bis 4, mit Vorrichtungen zum Auffangen von während der energetischen Verwertung der fluiden Betriebsstoffe (56) in der Energiemanagementeinheit (10) anfallenden Restgasen (58) und zur Rückführung dieser Restgase in ein Restgas-Transportsystem (6, 62) des Energieversorgungssystems (2).

6. Energiemanagementeinheit nach einem der Ansprüche 1 bis 5, mit Vorrichtungen zur Erhitzung von Wärmemedien (88) und/oder Abkühlung von Kältemedien (89), wobei die dazu benötigte Energie aus dem Stromnetz (4) des Energieversorgungssystems (2) bezogen und/oder durch die energetische Verwertung der aus dem Transportsystem (6, 60) des Energieversorgungssystems bezogenen fluiden Betriebsstoffen (56) erhalten wird, und Vorrichtung zur Einspeisung der erhitzten Wärmemedien (88) und/oder abgekühlten Kältemedien (89) in entsprechende Wärmetransportsysteme (92) bzw. Kältetransportsysteme (94) des lokalen Energieversorgungsnetzwerks (29).

7. Energiemanagementeinheit (10) zur Versorgung eines lokalen Energieversorgungsnetzwerks (29), mit Vorrichtungen zur Entnahme von elektrischem Strom (46) aus einem übergeordneten Stromnetz (4, 36) eines Energieversorgungssystems (2), zu dessen Umwandlung in elektrischen Strom (47) niedrigerer Spannung, und zur Einspeisung dieses elektrischen Stroms niedrigerer Spannung in ein Stromnetz (90) des lokalen Energieversorgungsnetzwerks; und Vorrichtungen zur Entnahme von fluiden Betriebsstoffen (56) aus einem Transportsystem (6, 60) für fluide Betriebsstoffe des Energieversorgungssystems (2), zur Erzeugung von elektrischem Strom (47) aus den genannten fluiden Betriebsstoffen (56), und zur Einspeisung des genannten elektrischen Stroms in das genannte Stromnetz des lokalen Energieversorgungsnetzwerks; **gekennzeichnet durch** eine Steuerungsanlage (70), die dazu eingerichtet ist, über ein Kommunikationsnetzwerk (16) mit einer Steuerungseinheit (9) des Energieversorgungssystems (2) zu kommunizieren, und durch Vorrichtungen zum Auffangen von während der energetischen Verwertung der fluiden Betriebsstoffe (56) in der Energiemanagementeinheit (10) anfallenden Restgasen (58) und zur Rückführung dieser Restgase in ein Restgas-Transportsystem (6, 62) des Energieversorgungssystems (2).

8. Energiemanagementeinheit nach Anspruch 7, wobei die Steuerungsanlage (70), dazu eingerichtet ist, aus einem als gemeinsame Leitungssystem ausgelegtem Transportsystem für fluide Betriebsstoffe (56) und Restgase (58) des Energieversorgungssystems (2) wechselweise fluide Betriebsstoffe zu entnehmen, und Restgase in dieses gemeinsame Leitungssystem einzuspeisen.

9. Verfahren zur Versorgung von einem oder mehreren lokalen Energieversorgungssystemen (30) mit elektrischer Energie (47), wobei
- elektrische Energie (45) aus einem übergeordneten Stromnetz (34) bezogen und in ein erstes Energieversorgungsnetzwerk (4) eingespeist (46) wird;
- mit mindestens einer Energieerzeugungseinheit (8) fluide Betriebsstoffe (56) hergestellt, gegebenenfalls zwischengespeichert (64) und in ein zweites Energieversorgungsnetzwerk (6) eingespeist werden, wobei die zur Herstellung der fluiden Betriebsstoffe notwendige Energie aus dem übergeordneten Stromnetz (34) und optional zusätzlich aus energiehaltigen kohlenstoffhaltigen Ausgangsmaterialien (50) bezogen wird;
- mit mindestens einer Energiemanagementeinheit (10) elektrische Energie (46) aus dem ersten Energieversorgungsnetzwerk (4) bezogen und in das lokale Stromnetz (90) eingespeist wird;
- mit der mindestens einen Energiemanagementeinheit (10) Energie in Form von fluiden Betriebsstoffen (56) aus dem zweiten Energieversorgungsnetzwerk (6) bezogen und gegebenenfalls zwischengespeichert (64') wird, und durch energetische Verwertung der fluiden Betriebsstoffe elektrische Energie (47) für das lokale Energieversorgungssystem (30) hergestellt und in das lokale Stromnetz (90) eingespeist wird; und
- die Herstellung von fluiden Betriebsstoffen (56) durch die mindestens eine Energieerzeugungseinheit (8) sowie der Bezug der beiden verschiedenen Energieformen in Form von elektrischer Energie (46) und fluiden Betriebsstoffen (56) durch die mindestens eine Energiemanagementeinheit so gesteuert und aufeinander abgestimmt wird, dass, dass die maximalen Transportraten in den beiden Energieversorgungsnetzwerken (4, 6) geringer sind als ohne Steuerung.
